# EUROPEAN PATENT SPECIFICATION

(11) **EP 3 717 926 B1**
(45) Date of publication and mention of the grant of the patent: **04.11.2026**
(21) Application number: 17804196.8
(22) Date of filing: 27.11.2017
(51) Int. Cl.: G01S 5/02

(54) **SERVICES USING RADIO NODE IDENTIFIERS**
DIENSTE MIT VERWENDUNG VON FUNKKNOTENIDENTIFIKATOREN
SERVICES UTILISANT DES IDENTIFIANTS DE N UDS RADIOÉLECTRIQUES

(43) Date of publication of application: 07.10.2020
(73) Proprietor: HERE Global B.V., 5611 ZT Eindhoven (NL)
(72) Inventor: WIROLA, Lauri Aarne Johannes, 33720 Tampere (FI); SYRJÄRINNE, Jari Tapani, 33720 Tampere (FI)
(74) Representative: Sariot, Eray
(86) International application number: PCT/EP2017/080531
(87) International publication number: WO 2019/101344

(56) References cited:
- WO-A1-2010/105228
- WO-A1-2012/095922
- US-A1- 2013 289 916
- US-A1- 2013 343 218

## Description

### FIELD

The following disclosure relates to the field of indoor positioning, and more particularly relates to systems, apparatuses, and methods for enabling or providing different sets of transmission parameter(s) that may be used for indoor positioning systems.

### BACKGROUND

Indoor positioning requires novel systems and solutions that are specifically developed and deployed for this purpose. The "traditional" positioning technologies, which are mainly used outdoors, for instance satellite and cellular positioning technologies, cannot deliver such performance indoors that would enable seamless and equal navigation experience in both environments.

The required positioning accuracy (within 2 to 3 meters), coverage (~100 %) and floor detection are challenging to achieve with satisfactory performance levels with the systems and signals that were not designed and specified for the indoor use cases in the first place. Satellite-based radio navigation signals simply do not penetrate through the walls and roofs for the adequate signal reception and the cellular signals have too narrow bandwidth for accurate ranging by default.

Several indoor-dedicated solutions have already been developed and commercially deployed during the past years, for instance solutions based on pseudolites (Global Positioning System (GPS)-like short-range beacons), ultra-sound positioning, Bluetooth Low Energy (BLE) signals (e.g. High-Accuracy Indoor Positioning, HAIP) and Wi-Fi fingerprinting. What is typical to these solutions is that they require either deployment of totally new infrastructure (radio nodes or radio beacons, or tags to name but a few non-limiting examples) or manual exhaustive radio surveying of the buildings including all the floors, spaces and rooms. This is rather expensive and will take a considerable amount of time to build the coverage to the commercially expected level, which in some cases narrowed the potential market segment only to very thin customer base, for instance for health care or dedicated enterprise solutions. Also, the diversity of these technologies makes it difficult to build a globally scalable indoor positioning solution, and the integration and testing will become complex if a large number of technologies needs to be supported in the consumer devices (e.g. smartphones).

For an indoor positioning solution to be commercially successful, that is, i) being globally scalable, ii) having low maintenance and deployment costs, and iii) offering acceptable end-user experience, the solution needs to be based on an existing infrastructure in the buildings and on existing capabilities in the consumer devices. This leads to an evident conclusion that the indoor positioning needs to be based on Wi-Fi- and/or Bluetooth (BT)-technologies that are already supported in every smartphone, tablet, laptop and even in the majority of feature phones. It is, thus, required to find a solution that uses the Wi-Fi- and BT-radio signals in such a way that makes it possible to achieve 2 to 3 meter horizontal positioning accuracy, close to 100% floor detection with the ability to quickly build the global coverage for this approach.

Further, a novel approach for radio-based indoor positioning that models for instance the Wi-Fi-radio environment (or any similar radio e.g. Bluetooth) from observed Received Signal Strength (RSS)-measurements as two-dimensional radio maps and is hereby able to capture the dynamics of the indoor radio propagation environment in a compressable and highly accurate way. This makes it possible to achieve unprecedented horizontal positioning accuracy with the Wi-Fi signals only within the coverage of the created radio maps and also gives highly reliable floor detection.

To setup indoor positioning in a building, the radio environment in the building needs to be surveyed. This phase is called radiomapping. In the radiomapping phase samples containing geolocation (like latitude, longitude, altitude; or x, y, floor) and radio measurements (Wi-Fi and/or Bluetooth radio node identities and signal strengths). Having these samples allows understanding how the radio signals behave in the building. This understanding is called a radio map. The radio map enables localization capability to devices. When they observe varying radio signals, the signals can be compared to the radio map resulting in the location information.

The radio samples for the radio map may be collected with special software tools or crowd-sourced from the user devices. While automated crowd-sourcing can enable indoor localization in large amount of buildings, manual data collection using special software tools may be the best option, when the highest accuracy is desired.

In the related art, WO2010105228A1 discloses systems, apparatuses and methods for detecting physical cell identifier collision. US2013343218A1 discloses a communication system comprising a plurality of access nodes for cooperatively detecting a transmission from a communication device. US2013289916A1 discloses an apparatus and method for calibrating a radio-based positioning device by comparing a received radio signal pattern to reference radio signal patterns.

### SUMMARY

Yet another aspect of the modern Bluetooth radio node respectively beacon systems is beacon monitoring and management. The key aspect of these systems may be as follows:
Hubs are deployed throughout the venue so that each beacon can communicate with at least one hub. The hubs, on the other hand, are connected to a monitoring/management server via a gateway hub, which is essentially a wired/wireless router. The hubs may be connected to the gateway hub through cable (e.g. Ethernet) or wirelessly (e.g. Wi-Fi, Cellular). Additionally or alternatively, a plurality of radio nodes (e.g. beacons) may for instance form a mesh communication network. In such a case, it is possible that only a single gateway hub is required.

Further, the radio nodes may be connected to the single gateway hub, e.g. wirelessly (e.g. Wi-Fi, Cellular). The radio nodes forming the mesh communication network may communicate (e.g. transmit information) with each other. The gateway hub connected to the radio nodes forming the mesh communication network is further connected to a monitoring/management server.

The beacon monitoring refers to monitoring the beacon characteristics most typically via one-way communications by the hubs. The beacons may e.g. periodically broadcast their battery states, which transmissions are captured by the hubs and further routed to the monitoring/management server for analysis and visualization. The beacon management, on the other hand, refers to being able to perform two-way communication with the hubs and beacons. With a beacon management system e.g. the beacon transmit power can be re-configured remotely or the advertisement message changed, when needed. The server managing/monitoring the hub and/or beacon constellations can be a virtual server operated in a cloud (e.g. AWS, Azure), or it can be also a physical local server constituting a self-hosted, high-security system.

However, in commercial positioning service, one option to provide higher value services is to differentiate with quality-of-service. Quality-of-service may be e.g. accuracy or the update rate of the location on the screen. Providing higher QoS improves user experience and can thus be more valuable than the standard (basic) service with lower QoS.

It is thus, inter alia, an object of the invention to achieve a solution for being able to enable or to provide different positioning quality-of-services.

According to a first exemplary aspect of the present invention, a first method is disclosed. The first method, performed by at least one first apparatus, is defined in claim 1.

This method may for instance be performed and/or controlled by an electronic device (e.g. of the venue). For instance, the method may be performed and/or controlled by using at least one processor of the electronic device.

According to a second exemplary aspect of the present invention, a second method is disclosed. The second method, performed by at least one second apparatus, is defined in claim 12.

This method may for instance be performed and/or controlled by a radio node (e.g. of the venue). For instance, the method may be performed and/or controlled by using at least one processor of the radio node.

According to a further exemplary aspect of the invention, a computer program is disclosed, the computer program when executed by a processor causing an apparatus, for instance an electronic device or a radio node, to perform and/or control the actions of the method according to the first and/or second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first and/or second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first and/or second third exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the present invention, a system is disclosed, comprising:
at least one first apparatus according to the first aspect of the invention as disclosed above, and at least one second apparatus according to the second aspect of the invention as disclosed above.

In the following, exemplary features and exemplary embodiments of all aspects of the present invention will be described in further detail.

For instance, the radio node may for instance be comprised by the venue, e.g. by an infrastructure of the venue. Such a radio node of the venue may for instance be a beacon used for indoor positioning and/or floor detection, e.g. according to BT-(Bluetooth) and/or BLE- (Bluetooth Low Energy) specification, or may for instance be a Wi-Fi Access Point for indoor positioning and/or floor detection, e.g. according to the WLAN- (Wireless Local Area Network) specification). Indoor positioning and/or floor detection may for instance be performed and/or controlled based on a radio map. The radio node of the venue may for instance comprise or be connectable to a transceiver, e.g. according to the BT-, BLE, and/or WLAN-specification to provide wireless-based communication. The radio node of the venue may for instance use such a transceiver for transmitting and/or broadcasting one or more signals, e.g. comprising one or more information, e.g. identifier information.

The venue may for instance be a building, shopping mall, office complex, public accessible location (e.g. station, airport, university or the like), to name but a few non-limiting examples.

For instance, sets of one or more transmission parameters of the plurality of sets of one or more transmission parameters at least partially differ from each other. As an example, each set of one or more transmission parameters of at least one set of one or more transmission parameters of the plurality of sets of one or more transmission parameters may be associated with a separate radio map which may configured to be used for positioning purposes. Furthermore, optionally, each radio map may be associated with a different quality of service regarding positioning, i.e., each set of one or more transmission parameters of at least one set of one or more transmission parameters of the plurality of sets of one or more transmission parameters may be associated with a different quality of service regarding positioning. The plurality of sets of one or more transmission parameters may be stored in a memory, e.g. in a memory of the apparatus according to the first exemplary aspect and/or of the apparatus according to the second exemplary aspect and/or of a server.

Furthermore, the at least an apparatus according to the second exemplary aspect may represent at least one radio node, wherein each radio node of at least one radio node of the one or more radio nodes of the venue may for instance be associated with two or more identifier information. For instance, each radio node of the at least one radio node may be associated with two or more logical radio nodes, wherein each radio node of the two or more logical radio node is associated with a respective identifier information of the two or more identifier information associated with the respective radio node. Each identifier information of the two or more identifier information associated with a radio node of the at least one radio node is indicative of information allowing the respective logical radio node associated with the respective radio node of a venue to be identified.

As an example, each radio node of the at least one radio node being associated with two or more identifier information may be configured to provide at least two logical radio nodes. For instance, a first logical radio node of a respective radio node of the at least one radio node may be associated with the first set of one or more transmission parameters and a second logical radio node of the respective radio of the at least one radio node may be associated with the second set of one or more transmission parameters.

Each radio node of the at least one radio node being associated with two or more identifier information is configured to broadcast each of the two or more identifier information associated with the respective radio node, wherein the respective radio node is configured to transmit a respective identifier information of the two or more identifier information according to the set of one or more transmission parameters from the plurality of sets of one or more transmission parameter. Thus, a radio node being associated with two or more identifier information may represent one physical radio node, e.g. one physical device, but may be configured to act as two or more logical radio nodes, wherein the radio node is configured to transmit for each of the two or more logical radio nodes a respective identifier information indicative of information allowing the respective logical radio node of a venue to be identified, wherein the respective identifier information indicative of information allowing the respective logical radio node of a venue to be identified is associated with a respective set of one or more transmission parameters of the plurality of sets of transmission parameters .

For instance, as an example, when a radio node of the at least one radio node is associated with the two identifier information, the radio node may be configured to transmit identifier information indicative of information allowing a first logical radio node of a venue to be identified according to the first set of one or more transmission parameters from the plurality of sets of one or more transmission parameters, and to transmit identifier information indicative of information allowing a second logical radio node of a venue to be identified according to the second set of one or more transmission parameters from the plurality of sets of one or more transmission parameters. Thus, this radio node provides two logical radio nodes which may be received by one or more of the devices. It has to be understood that the invention is not limiting to providing two logical radio nodes by one radio node, but may also comprise at least one radio node providing two or more logical radio nodes.

As an example, each of the at least one apparatus according to the first exemplary aspect may represent an electronic device.

The electronic device is configured to obtain first identifier information indicative of information allowing a logical radio node of a venue to be identified, wherein the first identifier information is associated with a set of one or more transmission parameters from a plurality of sets of one or more transmission parameters, and wherein each transmission parameter of the set of one or more transmission parameters associated with the first identifier information is indicative of a respective attribute with respect to a communication of the logical radio node transmitting the first identifier information in the venue. E.g. the first identifier information may be determined, e.g. by analyzing a received signal (e.g. a beacon signal) from a respective radio node.

The electronic device may for instance not know about the set of one or more transmission parameters from the plurality of sets of one or more transmission parameters, wherein the identifier information of the radio node depends on said set of one or more transmission parameters from the plurality of sets of one or more transmission parameters.

As an example, the electronic device may receive the first identifier information indicative of information allowing a logical radio node of a venue to be identified from a radio node of the one or more radio nodes, wherein the transmission of the first identifier information from the respective radio node is performed in accordance with the set of one or more transmission parameters from a plurality of sets of one or more transmission parameters associated with the first identifier information.

The electronic device is configured to obtain second identifier information indicative of information allowing a logical radio node of a venue to be identified, wherein the second identifier information is associated with a second set of one or more transmission parameters from the plurality of sets of one or more transmission parameters, and wherein each transmission parameter of the set of one or more transmission parameters associated with the second identifier information is indicative of a respective attribute with respect to a communication of the logical radio node transmitting the second identifier information in the venue.

For instance, the electronic device may receive the second identifier information indicative of information allowing a logical radio node of a venue to be identified from a radio node of the one or more radio nodes, wherein the transmission of the second identifier information from the respective radio node is performed in accordance with the set of one or more transmission parameters from a plurality of sets of one or more transmission parameters associated with the second identifier information.

As an example, the electronic device may receive the first identifier information indicative of information allowing a logical radio node of a venue to be identified and the second identifier information indicative of information allowing a logical radio node of a venue to be identified from the same radio node of the one or more radio node, such that the first identifier and the second identifier may originate from the same radio node (which may represent a single one physical radio node). Or, as another example, the electronic device may receive the first identifier information indicative of information allowing a logical radio node of a venue to be identified and the second identifier information indicative of information allowing a logical radio node of a venue to be identified from different radio nodes, wherein, in this case, the one or more radio nodes may be at least two radio nodes. These different radio nodes may be radio nodes according to the second exemplary aspect or may be other radio nodes, e.g. only transmitting one identifier information.

The electronic device is configured to determine whether the set of one or more transmission parameters associated with the first identifier information is at least partially different from the set of one or more transmission parameters associated with the second identifier information.

For instance, this determining whether the set of one or more transmission parameters associated with the first identifier information is at least partially different from the set of one or more transmission parameters associated with the second identifier information may be performed based on the obtained first identifier information and the obtained second identifier information.

As an example, the electronic device may request a database which comprises a link between the obtained first identifier information indicative of information allowing a logical radio node of a venue to be identified and the set of one or more transmission parameters associated with this first identifier information and comprises a link between the obtained second identifier information indicative of information allowing a logical radio node of a venue to be identified and the set of one or more transmission parameters associated with this second identifier information, such that the device may determine based on the information received from the database in response to the request whether the set of one or more transmission parameters associated with the first identifier information is at least partially different from the set of one or more transmission parameters associated with the second identifier information or whether set of one or more transmission parameters associated with the first identifier information is the same as the set of one or more transmission parameters associated with the second identifier information.

For instance, said database may represent a memory, which may comprise a look-up-table. The memory (or database) may for instance be comprised by a server or be connected to the server. Additionally or alternatively, the memory may for instance be comprised by to be connected to the electronic device. For instance, said memory (or database) may be stored in the electronic device or may located at least one further apparatus being different from the device, e.g. at server or at least one entity, wherein the device may be configured to contact the at least one further apparatus via a network, e.g. a wireless network.

As another example, the device may be configured to generate (or create) the set of one or more transmission parameters associated with the obtained first identifier based on the obtained first identifier and to generate the set of one or more transmission parameters associated with second obtained identifier based on the obtained second identifier. Then, for instance, the device may compare the generated set of one or more transmission parameters associated with the obtained first identifier with the generated set of one or more transmission parameters associated with second obtained identifier in order to determine whether the set of one or more transmission parameters associated with the first identifier information is at least partially different from the set of one or more transmission parameters associated with the second identifier information.

For instance, depending on the outcome of determining whether the set of one or more transmission parameters associated with the first identifier information is at least partially different from the set of one or more transmission parameters associated with the second identifier information the electronic device may perform further actions.

As an example, if it is determined that the set of one or more transmission parameters associated with the first identifier information is not different from the set of one or more transmission parameters associated with the second identifier information the device knows that the first identifier information and the second identifier information has both been transmitted according to the same set of one or more transmission parameters, and, for instance, the device then knows that the first logical radio node identified by the first identifier information indicative of information allowing a radio node of a venue to be identified is associated with a first physical radio node being different from a second physical radio node being associated with the second logical radio node identified by the second identifier information indicative of information allowing a radio node of a venue to be identified, since, as an example, the same physical radio node would not transmit two different identifier information each being indicative of information allowing a (different logical) radio node to be identified by using the same set of one or more transmission parameters. Thus, for instance, even in the case that the first logical radio node and the second logical node are provided by the same physical radio node, from the device's perspective both the first logical radio node identified by the first identifier information and the second logical radio node identified by the second identifier information may appear to represent to different radio nodes.

Thus, e.g., when the set of one or more transmission parameters associated with the first identifier information is at least partially different from the set of one or more transmission parameters associated with the second identifier information, the first identifier information is associated with a first logical radio node and the second identifier information is associated with a second logical radio node. As will be explained below, the first logical radio node and the second logical radio node may be associated with the same physical logical radio node, i.e. the physical logical radio node according to the second exemplary aspect is configured to provide the first logical radio node and the second logical radio node, or, as another example, the first logical radio node may be associated with a first radio node and the second logical radio node may be associated with a second radio node, wherein the first radio node is different from the second radio node.

Or, as an example, if it is determined that the set of one or more transmission parameters associated with the first identifier information is at least partially different from the set of one or more transmission parameters associated with the second identifier information the device knows that the first identifier information and the second identifier information has both been transmitted to the device according to different sets of one or more transmission parameters.

Each set of two or more sets of one or more transmission parameters of the plurality of sets of one or more transmission parameters are associated with a different positioning quality-of-service, wherein each set of one or more transmission parameters of the plurality of sets of one or more transmission parameters may be associated with a different radio map being associated with a respective positioning quality-of-service. The difference in positioning quality-of-service between the sets of the two or more sets of one or more transmission parameters may result from the fact that each set of these two or more sets of one or more transmission parameters at least partially differs from the remaining set(s) of these two or more set of one or more transmission parameters and therefore transmission quality of a transmission of a identifier information indicative of information allowing a logical radio node of a venue to be identified depends on the set of one or more transmission parameters used for transmitting this identifier information. As an example, the first set of one or more transmission parameters may be associated with better positioning quality-of-service compared to the positioning quality-of-service of the second set of one or more transmission parameters, or vice versa.

According to an exemplary embodiment of all exemplary aspects of the present invention, when the set of one or more transmission parameters associated with the first identifier information is at least partially different from the set of one or more transmission parameters associated with the second identifier information, the first identifier information is associated with a first logical radio node and the second identifier information is associated with a second logical radio node.

The method further comprises, when the set of one or more transmission parameters associated with the first identifier information is at least partially different from the set of one or more transmission parameters associated with the second identifier information:
- selecting a set of one or more transmission parameters from the set of one or more transmission parameters associated with the first identifier information and the set of one or more transmission parameters associated with the second identifier information, and configuring the at least one first apparatus based on the selected set of one or more transmission parameters.

According to an exemplary embodiment of all exemplary aspects of the present invention a first set of one or more transmission parameters of the plurality of sets of one or more transmission parameters is associated with a medium positioning quality-of-service and a second set of one or more transmission parameters of the plurality of sets of one or more transmission parameters is associated with a high positioning quality-of-service, the method comprising, wherein the method further comprises, when said second set of one or more transmission parameters associated with a high positioning quality-of-service is selected, collecting data and, in particular, causing providing at least a part of the collected data to a server.

According to an exemplary embodiment of the first exemplary aspects of the present invention the method further comprises determining a position based at least partially on a radio map for the radio node associated with the selected set of one or more transmission parameters.

According to an exemplary embodiment of the first exemplary aspects of the present invention said selecting a set of one or more transmission parameters is performed based on a profile stored in said at least one first apparatus.

According to an exemplary embodiment of the first exemplary aspects of the present invention said selecting a set of one or more transmission parameters is performed based on a user interaction via a user interface of the at least one apparatus.

According to an exemplary embodiment of the first exemplary aspects of the present invention the method further comprises, when the set of one or more transmission parameters associated with the first identifier information is at least partially different from the set of one or more transmission parameters associated with the second identifier information:
- causing providing an option information via a user interface of the at least one first apparatus, wherein the option information is configured to present a user at least two options to select, wherein a first option of the at least two options is associated with the set of one or more transmission parameters associated with the first identifier information and a second option of the at least two options is associated with the set of one or more transmission parameters associated with the second identifier information, and
- receiving a selection of one of the at least two options.

According to the present invention each set of one or more transmission parameters of the plurality of sets of one or more transmission parameters is associated with a different positioning quality-of-service.

According to an exemplary embodiment of the first exemplary aspects of the present invention said determining whether the set of one or more transmission parameters associated with the first identifier information is at least partially different from the set of one or more transmission parameters associated with the second identifier information is performed based on the obtained first identifier information and the obtained second identifier information.

According to an exemplary embodiment of the first exemplary aspects of the present invention the method further comprises for each of the obtained first and second identifier information:
- determining the set of one or more transmission parameters of the plurality of sets of one or more transmission parameters being associated with the respective obtained identifier information based on the respective obtained identifier information.

According to an exemplary embodiment of the first exemplary aspects of the present invention the method further comprises for each of the obtained first and second identifier information:
- determining a discrete value based on the respective identifier information, wherein the discrete value is indicative of a value from a finite number of values;
- determining the set of one or more transmission parameters of the plurality of sets of one or more transmission parameters being associated with the respective obtained identifier information based on the determined discrete value.

For instance, the set of one or more transmission parameters is associated with a discrete value so that based on the discrete value the set of one or more transmission parameters is determinable.

According to an exemplary embodiment of any of all exemplary aspects of the present invention the set of one or more transmission parameters is associated with a discrete value so that based on the discrete value the set of one or more transmission parameters is determinable.

According to an exemplary embodiment of any of all exemplary aspects of the present invention each set of one or more transmission parameters of at least one set of one or more transmission parameters from the plurality of sets of one or more transmission parameters comprises one or more of the following parameters i) to iii):
i) a transmission power parameter;
ii) one or more transmission channel parameters;
iii) a transmission interval parameter.

According to an exemplary embodiment of the first exemplary aspects of the present invention the method further comprises receiving a signal representation, the signal representation comprising the first identifier information and the second identifier information.

According to an exemplary embodiment of the second exemplary aspects of the present invention the method further comprises transmitting a signal representation, the signal representation comprising the first identifier information and the second identifier information.

According to an exemplary embodiment of any of all exemplary aspects of the present invention in said signal representation the first identifier information is transmitted based on the set of one or more transmission parameters associated with the first identifier information and the second identifier information is transmitted based on the set of one or more transmission parameters associated with the second identifier information.

According to an exemplary embodiment of any of all exemplary aspects of the present invention said signal representation is based on a multiplexing of a transmission of the first identifier and the transmission of the second identifier.

According to an exemplary embodiment of any of all exemplary aspects of the present invention said multiplexing is performed based on at least one of the following multiplexing schemes i) to iii):
i) time division multiplexing,
ii) frequency division multiplexing, and
iii) code division multiplexing.

According to an exemplary embodiment of any of all exemplary aspects of the present invention said time division multiplexing is performed based on at least one transmission interval parameter of the set of one or more transmission parameters associated with the first identifier information and/or based on at least one transmission interval parameter of the set of one or more transmission parameters associated with the second identifier information.

According to an exemplary embodiment of any of all exemplary aspects of the present invention said frequency division multiplexing is performed based on at least one transmission channel parameter of the set of one or more transmission parameters associated with the first identifier information and/or based on at least one transmission channel parameter of the set of one or more transmission parameters associated with the second identifier information.

According to an exemplary embodiment of the first exemplary aspects of the present invention the method comprises configuring a radio node according to the set of one or more transmission parameters associated with the first identifier information and according to set of one or more transmission parameters associated with the second identifier information.

According to an exemplary embodiment of the first exemplary aspects of the present invention the method comprises, for each identifier information of at least one identifier information of the first identifier information and the second identifier information:
- determining the respective identifier information based on the set of one or more transmission parameters associated with the respective identifier information.

According to an exemplary embodiment of any of all exemplary aspects of the present invention each set of the first set of one or more transmission parameters and the second set of one or more transmission parameters is associated with a respective discrete value, wherein each set of the first set of one or more transmission parameters and the second set of one or more transmission parameters comprises a combination of more than one transmission parameters and wherein the respective discrete value is indicative of a value from a finite number of values.

According to an exemplary embodiment of any of all exemplary aspects of the present invention at least a part of the identifier information of at least one identifier information of the first identifier information and the second identifier information is ownership information, wherein the ownership information is indicative of one or more radio nodes of a company or an owner of the one or more radio nodes, and at least another part of the identifier information of at least one identifier information of the first identifier information and the second identifier information instance information, wherein the instance information is indicative of an identification of a radio node of the one or more radio nodes of the company or the owner of the one or more radio nodes.

According to an exemplary embodiment of any of all exemplary aspects of the present invention the instance information is divided into a plurality of upper bits and a plurality of lower bits.

According to an exemplary embodiment of any of all exemplary aspects of the present invention the instance information comprises the discrete value.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention, for instance performed by electronic 150 of Fig. 1;
- Fig. 3: a flowchart showing an example embodiment of a method according to the second exemplary aspect of the present invention, for instance performed by radio node 140 of Fig. 1;
- Fig. 4: a flowchart showing an example embodiment of a method according to the first exemplary aspect of the present invention, for instance performed by electronic device 150 of Fig. 1;
- Fig. 5a: a flowchart showing an example embodiment of a method according to the first and/or second aspect of the present invention, for instance performed by server 110 of Fig. 1;
- Fig. 5b: a schematic block diagram of an example embodiment of an apparatus according to the first exemplary aspect of the present invention and a schematic block diagram of an example embodiment of an apparatus according to the second exemplary aspect of the present invention;;
- Fig. 6: a flowchart showing an example embodiment of a method according to the second exemplary aspect of the present invention, for instance performed by radio node 140 of Fig. 1;
- Fig. 7: a flowchart showing an example embodiment of a method according to the second exemplary aspect of the present invention, for instance performed by radio node 140 of Fig. 1;
- Fig. 8: a flowchart showing an example embodiment of a method according to the first exemplary aspect of the present invention, for instance performed by electronic device 150 of Fig. 1;
and
- Fig. 9: a schematic block diagram of an apparatus according to an exemplary aspect of the present invention, which may for instance represent server 110 of Fig. 1;
- Fig. 10: schematic block diagram of an apparatus according to the second exemplary aspect of the present invention, for instance radio node 140 of Fig. 1; and
- Fig. 11: schematic block diagram of an apparatus according to the first exemplary aspect of the present invention, for instance electronic device 150of Fig. 1.

### DETAILED DESCRIPTION

The following description serves to deepen the understanding of the present invention and shall be understood to complement and be read together with the description as provided in the above summary section of this specification.

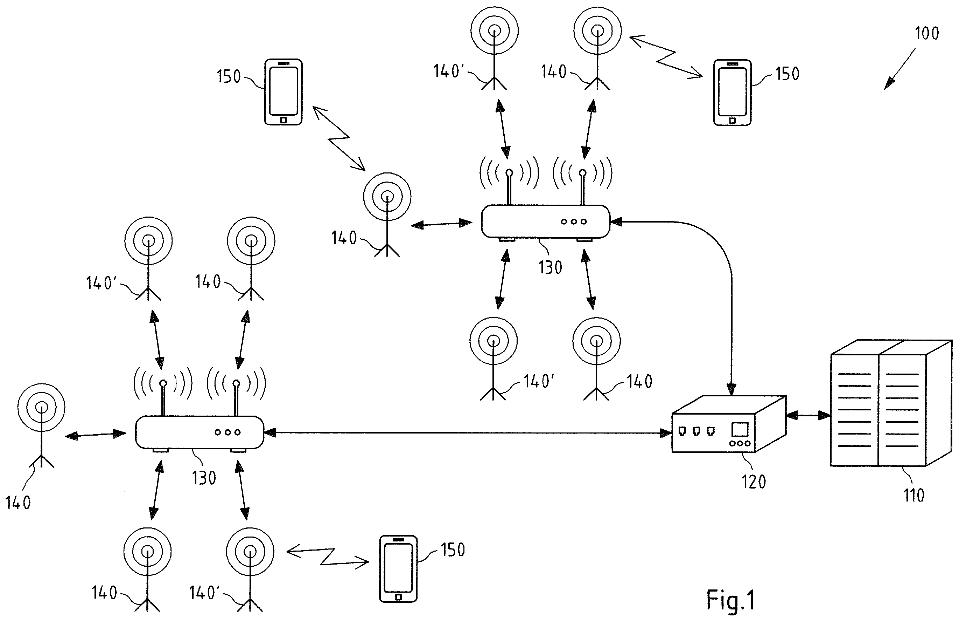

Fig. 1 is a schematic high-level block diagram of a system 100 according to an exemplary aspect of the present invention. System 100 comprises a server 110, a gateway hub 120, one or more hubs 130, one or more radio nodes 140, at hand embodied as beacons, and one or more electronic devices 150, at hand embodied as mobile devices. Such a mobile device may for instance be e.g. a smartphone, tablet, portable navigation device, IoT (Internet of Things) device to name but a few non-limiting examples. One or more of the aforementioned entities of the system 100 may for instance be comprised (e.g. installed and/or located) in a venue.

The server 110 may alternatively be embodied as a server cloud (e.g. a plurality of servers connected, e.g. via the Internet and providing services at least partially jointly). Further, the one or more radio nodes 140 may for instance be embodied as one or more loT devices. The gateway hub 120 and/or the hubs 130 may for instance be optional. In this case, the server 110 may be connected to the one or more radio nodes (e.g. beacons) e.g. via the Internet or via a wirebound or wireless communication connection (e.g. according to the Wi-Fi, BT, and/or BLE communication standard). Alternatively, the radio nodes 140 may for instance form a mesh communication network. In such a case, it is possible that only a single gateway hub 120 is comprised by the system 100. Further, the radio nodes 140 may be connected to the single gateway hub 120, e.g. wirelessly (e.g. Wi-Fi, Cellular). The radio nodes 140 forming the mesh communication network may communicate (e.g. transmit information) with each other. The gateway hub 120 connected to the radio nodes 140 forming the mesh communication network is further connected to the server 110, which may for instance be embodied as a monitoring respectively management server for the radio nodes 140.

Alternatively, the server 110 may for instance be optional. In this case, at least one of the hubs 130 may for instance provide the functionalities and/or services, which the server 110 provides in the other alternative embodiment, e.g. to the one or more radio nodes 140.

According to embodiments of the present invention, the server 110 may for instance monitor and/or manage the one or more radio nodes 140 of the venue. The server 110 may for instance obtain one or more transmission parameters. The one or more transmission parameters may for instance be obtained from a memory, e.g. a database, comprising a look-up table, e.g. comprised by or connected to the server 110. One or more obtained transmission parameters may for instance form a set of one or more transmission parameters. Furthermore, the one or more transmission parameters may for instance represent a plurality of sets of one or more transmission parameters, wherein the sets of one or more transmission parameters of the plurality of sets of one or more transmission parameters at least partially differ from each other. As an example, each set of one or more transmission parameters of at least one set of one or more transmission parameters of the plurality of sets of one or more transmission parameters may be associated with a separate radio map which may configured to be used for positioning purposes. Furthermore, optionally, each radio map may be associated with a different quality of service regarding positioning, i.e., each set of one or more transmission parameters of at least one set of one or more transmission parameters of the plurality of sets of one or more transmission parameters may be associated with a different quality of service regarding positioning. The plurality of sets of one or more transmission parameters may be stored in the memory.

For instance, each set of one or more transmission parameters from the plurality of sets of one or more transmission parameters comprises one or more of the following parameters i) to iii): i) a transmission power parameter; ii) one or more transmission channel parameters; iii) a transmission interval parameter.

For instance, as a non-limiting example, a first set of one or more transmission parameters of the plurality of sets of one or more transmission parameters may be defined and a second set of one or more transmission parameters of the plurality of sets of one or more transmission parameters may be defined, wherein the first set of one or more transmission parameters at least partially differs from the second set of one or more transmission parameters.

Furthermore, each radio node 140 of at least one radio node 140 of the one or more radio nodes 140, 140' of the venue may for instance be associated with two or more identifier information, which may be provided to the respective radio node 140 of the at least one radio node 140, e.g. via at least one of the one or more hubs 130, e.g. by the server 110. For instance, each radio node 140 of the at least one radio node 140 may be associated with two or more logical radio nodes 140, wherein each radio node 140 of the two or more logical radio nodes 140 is associated with a respective identifier information of the two or more identifier information associated with the respective radio node. Each identifier information of the two or more identifier information associated with a radio node 140 of the at least one radio node 140 is indicative of information allowing the respective logical radio node 140 associated with the respective radio node 140 of a venue to be identified.

As an example, each radio node 140 of the at least one radio node 140 being associated with two or more identifier information may be configured to provide at least two logical radio nodes. For instance, a first logical radio node of a respective radio node 140 of the at least one radio node 140 may be associated with the first set of one or more transmission parameters and a second logical radio node of the respective radio 140 of the at least one radio node 140 may be associated with the second set of one or more transmission parameters.

Each radio node 140 of the at least one radio node 140 being associated with two or more identifier information is configured to broadcast each of the two or more identifier information associated with the respective radio node 140, wherein the respective radio node 140 is configured to transmit a respective identifier information of the two or more identifier information according to the set of one or more transmission parameters from the plurality of sets of one or more transmission parameter. Thus, a radio node 140 being associated with two or more identifier information may represent one physical radio node 140, e.g. one physical device, but may be configured to act as two or more logical radio nodes, wherein the radio node 140 is configured to transmit for each of the two or more logical radio nodes a respective identifier information indicative of information allowing the respective logical radio node of a venue to be identified, wherein the respective identifier information indicative of information allowing the respective logical radio node of a venue to be identified is associated with a respective set of one or more transmission parameters of the plurality of sets of transmission parameters.

For instance, as an example, when a radio node 140 of the at least one radio node 140 is associated with the two identifier information, the radio node 140 may be configured to transmit identifier information indicative of information allowing a first logical radio node of a venue to be identified according to the first set of one or more transmission parameters from the plurality of sets of one or more transmission parameters, and to transmit identifier information indicative of information allowing a second logical radio node of a venue to be identified according to the second set of one or more transmission parameters from the plurality of sets of one or more transmission parameters. Thus, this radio node 140 provides two logical radio nodes which may be received by one or more of the devices 150. It has to be understood that the invention is not limiting to providing two logical radio nodes by one radio node 140, but may also comprise at least one radio node 140 providing two or more logical radio nodes.

Furthermore, as an optional example, at least one radio node 140' of the one or more radio nodes 140, 140' may be associated with exactly one identifier information and with exactly one logical radio node, wherein the identifier information is indicative of information allowing the logical radio node associated with the respective radio node 140' of a venue to be identified. In this example, the logical radio node may be considered to represent respective radio node 140'. The respective radio node 140' may be configured to transmit the identifier information indicative of information allowing the logical radio node of a venue to be identified according to a set of one or more transmission parameters of the plurality of sets of one or more transmission parameters, e.g. according to the first set of one or more transmission parameters from the plurality of sets of one or more transmission parameters or according to the second set of one or more transmission parameters from the plurality of sets of one or more transmission parameters. Thus, in this optional example, each radio node 140' of the at least one radio node 140' of the one or more radio nodes 140, 140' being associated with exactly one identifier information may be considered to provide exactly one logical radio node, wherein this logical radio node may be considered to represent the respective radio node 140'.

As a non-limiting example, the server 110 may for instance generate for at least one set of one or more transmission parameters of the plurality of sets of one or more transmission parameters a respective radio map being associated the respective set of one or more transmission parameters. For instance, such a radio map may be generated based at least partially on one or more radio measurements and on one or more position information gathered for a radio node of the at least one radio node 140, 140' which transmits (or broadcasts) according to the set of one or more transmission parameters associated with the respective radio map. For gathering the one or more radio measurements, each radio node 140, 140' of the one or more radio nodes 140, 140' of the venue are configured based on the at least one set of one or more transmission parameters associated with the respective radio node 140, 140' which may result in one or more signals being sent by the respective radio node 140, 140' according to associated at least one set of one or more transmission parameters (of the plurality of sets of one or more transmission parameters).

For instance, each radio node 140 of the one or more radio nodes 140, 140' of the venue may for instance broadcast its at least one identifier information, which was provided to each radio node 140, 140' of the one or more radio nodes 140, e.g. via at least one of the one or more hubs 130, e.g. by the server 110.

The broadcasted at least one identifier information (e.g. radio node 140' transmits one identifier information and radio node 140 transmits two or more identifier information) may for instance be obtained (e.g. received) by the one or more electronic devices 150. The one or more electronic devices 150 may for instance request position estimation, e.g. by a positioning request, wherein the positioning request may for instance comprise the identifier information obtained by the electronic device 150. According to an obtained identifier information of the request, a generated radio map associated with the identifier information may for instance be provided to the electronic device 150, e.g. by the server 110. Or, as another alternative, the electronic device 150 may send the one or more measurements or a part of the one or more measurements to the server 110, which then may access the radio map database associated with the identifier information (wherein the identifier information may be included in the positioning request transmitted by the electronic device) and may perform the required computations to estimate the position of the electronic device 150 and the the server 110 may transmit information on the estimated position the electronic device 150.

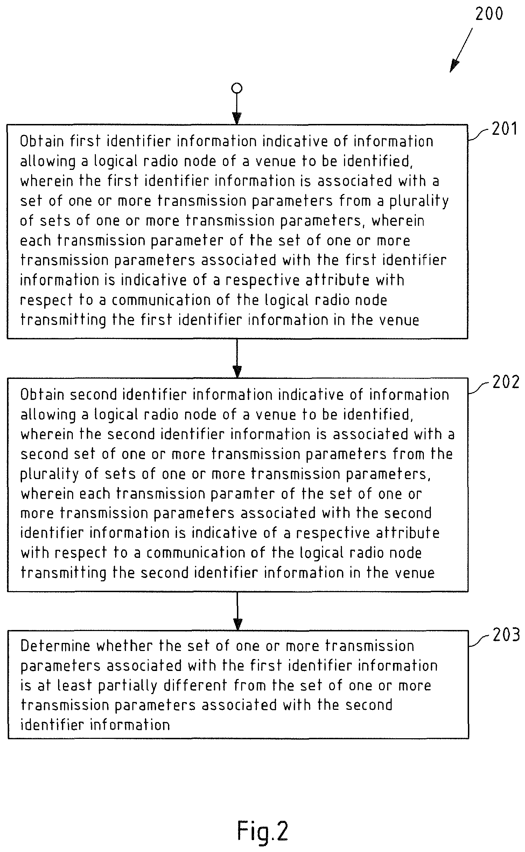

Fig. 2 is a flowchart 200 showing an example embodiment of a method according to the first exemplary aspect of the present invention. This flowchart 200 may for instance be performed by device 150 of Fig. 1.

As an example, device 150 may observe one or more radio nodes (e.g. radio nodes 140, 140' of Fig. 1) of a venue.

In a first step 201, first identifier information indicative of information allowing a logical radio node of a venue to be identified is obtained, wherein the first identifier information is associated with a set of one or more transmission parameters from a plurality of sets of one or more transmission parameters, and wherein each transmission parameter of the set of one or more transmission parameters associated with the first identifier information is indicative of a respective attribute with respect to a communication of the logical radio node transmitting the first identifier information in the venue. E.g. the first identifier information may be determined, e.g. by analyzing the received signal (e.g. a beacon signal) from the respective radio node 140, 140'.

For instance, the plurality of sets of one or more transmission parameters may be the plurality of sets of one or more transmission parameters described with respect to Fig. 1.

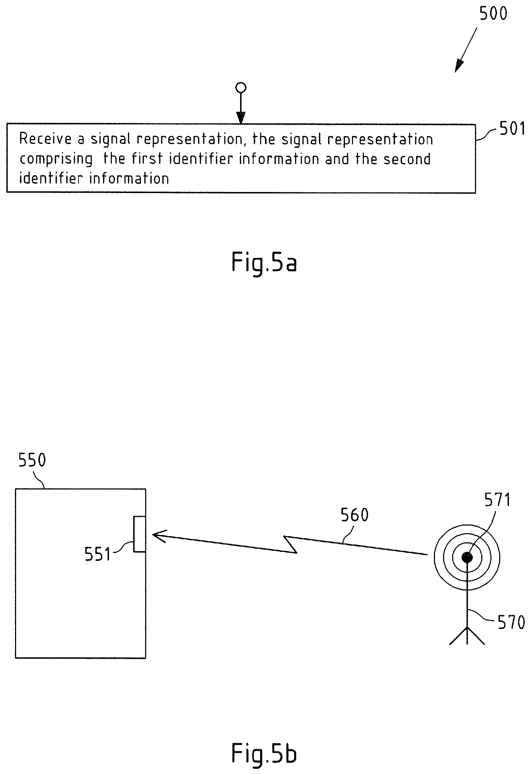

The electronic device 150 may for instance not know about the set of one or more transmission parameters from the plurality of sets of one or more transmission parameters, wherein the identifier information of the radio node depends on said set of one or more transmission parameters from the plurality of sets of one or more transmission parameters (see step 506 of Fig. 5a).

The method according to the first and/or second aspect of the present invention utilizes the generated radio maps of the one or more radio nodes of the venue and their association with identifier information. Simply, the correct radio maps are provided to the electronic device 150 for performing position estimation in indoor positioning and/or floor detection corresponding to an example method according to the first and/or second exemplary aspect of the present invention.

As an example, the device 150 may receive the first identifier information indicative of information allowing a logical radio node of a venue to be identified from a radio node 140, 140' of the one or more radio nodes 140, 140' depicted in Fig. 1, wherein the transmission of the first identifier information from the respective radio node 140, 140' is performed in accordance with the set of one or more transmission parameters from a plurality of sets of one or more transmission parameters associated with the first identifier information.

In a second step 202, second identifier information indicative of information allowing a logical radio node of a venue to be identified is obtained, wherein the second identifier information is associated with a second set of one or more transmission parameters from the plurality of sets of one or more transmission parameters, and wherein each transmission parameter of the set of one or more transmission parameters associated with the second identifier information is indicative of a respective attribute with respect to a communication of the logical radio node transmitting the second identifier information in the venue.

For instance, the device 150 may receive the second identifier information indicative of information allowing a logical radio node of a venue to be identified from a radio node 140, 140' of the one or more radio nodes 140, 140' depicted in Fig. 1, wherein the transmission of the second identifier information from the respective radio node 140, 140' is performed in accordance with the set of one or more transmission parameters from a plurality of sets of one or more transmission parameters associated with the second identifier information.

As an example, the device 150 may receive the first identifier information indicative of information allowing a logical radio node of a venue to be identified and the second identifier information indicative of information allowing a logical radio node of a venue to be identified from the same radio node 140' of the one or more radio node 140, 140', or, as another example, the device 150 may receive the first identifier information indicative of information allowing a logical radio node of a venue to be identified and the second identifier information indicative of information allowing a logical radio node of a venue to be identified from different radio nodes 140, 140' of the one or more radio nodes 140, 140, wherein, in this case, the one or more radio nodes 140, 140' are at least two radio nodes 140, 140'.

In a third step 203, it is determined whether the set of one or more transmission parameters associated with the first identifier information is at least partially different from the set of one or more transmission parameters associated with the second identifier information.

For instance, this determining whether the set of one or more transmission parameters associated with the first identifier information is at least partially different from the set of one or more transmission parameters associated with the second identifier information in third step 203 may be performed based on the obtained first identifier information and the obtained second identifier information.

As an example, the device 150 may request a database which comprises a link between the obtained first identifier information indicative of information allowing a logical radio node of a venue to be identified and the set of one or more transmission parameters associated with this first identifier information and comprises a link between the obtained second identifier information indicative of information allowing a logical radio node of a venue to be identified and the set of one or more transmission parameters associated with this second identifier information, such that the device may determine based on the information received from the database in response to the request whether the set of one or more transmission parameters associated with the first identifier information is at least partially different from the set of one or more transmission parameters associated with the second identifier information or whether set of one or more transmission parameters associated with the first identifier information is the same as the set of one or more transmission parameters associated with the second identifier information.

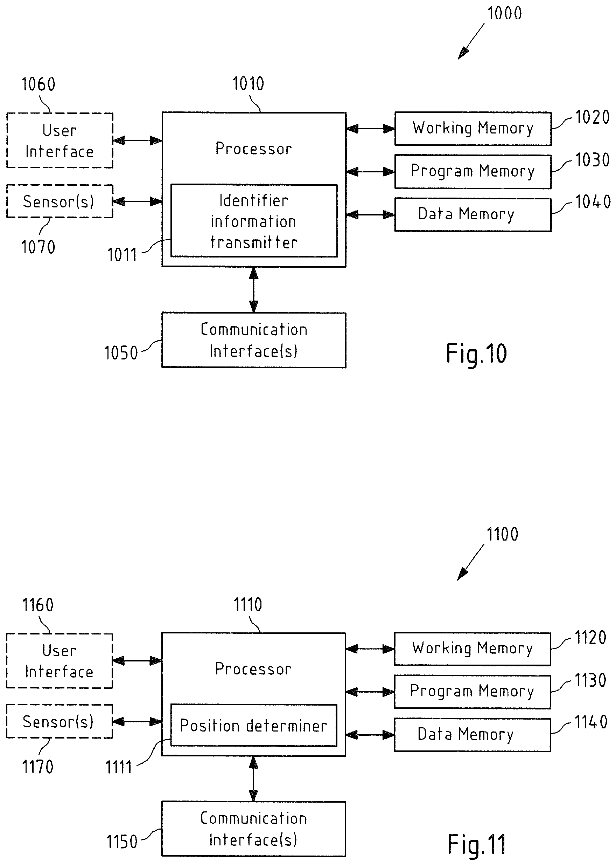

For instance, said database may represent a memory, which may comprise a look-up-table. The memory (or database) may for instance be comprised by the server (e.g. server 110 of Fig. 1, e.g. implemented by memory 920 or memory 930 or memory 940 depicted in Fig. 11) or be connected to the server. Additionally or alternatively, the memory (or database) may for instance be comprised by or be connected to a hub (e.g. one of the hubs 130 of Fig. 1) having a communication connection to one or more devices 150, which are to be provided with the determined one or more transmission parameters. Additionally or alternatively, the memory may for instance be comprised by to be connected to the device 150 of Fig. 1, e.g. implemented by memory 1120 or memory 1130 or memory 1140 depicted in Fig. 11. For instance, said memory (or database) may be stored in the device 150 or may located at least one further apparatus being different from the device150, e.g. at server 110 or at least one entity, wherein the device 150 may be configured to contact the at least one further apparatus via a network, e.g. a wireless network.

As another example, the device 150 may be configured to generate (or create) the set of one or more transmission parameters associated with the obtained first identifier based on the obtained first identifier and to generate the set of one or more transmission parameters associated with second obtained identifier based the obtained second identifier. Then, for instance, the device 150 may compare the generated set of one or more transmission parameters associated with the obtained first identifier with the generated set of one or more transmission parameters associated with second obtained identifier in order to determine whether the set of one or more transmission parameters associated with the first identifier information is at least partially different from the set of one or more transmission parameters associated with the second identifier information.

Depending on the outcome of determining whether the set of one or more transmission parameters associated with the first identifier information is at least partially different from the set of one or more transmission parameters associated with the second identifier information during step 203 the device 150 performs further actions.

As an example, if it is determined that the set of one or more transmission parameters associated with the first identifier information is not different from the set of one or more transmission parameters associated with the second identifier information the device 150 knows that the first identifier information and the second identifier information has both been transmitted according to the same set of one or more transmission parameters, and, for instance, the device 150 then knows that the first logical radio node identified by the first identifier information indicative of information allowing a radio node of a venue to be identified is associated with a first physical radio node 140, 140' being different from a second physical radio node 140, 140' being associated with the second logical radio node identified by the second identifier information indicative of information allowing a radio node of a venue to be identified, since, as an example, the same physical radio node 140, 140' would not transmit two different identifier information each being indicative of information allowing a (different logical) radio node to be identified by using the same set of one or more transmission parameters. Thus, for instance, even in the case that the first logical radio node and the second logical node are provided by the same physical radio node 140', from the device's 150 perspective both the first logical radio node identified by the first identifier information and the second logical radio node identified by the second identifier information may appear to represent to different radio nodes.

Thus, e.g., when the set of one or more transmission parameters associated with the first identifier information is at least partially different from the set of one or more transmission parameters associated with the second identifier information, the first identifier information is associated with a first logical radio node and the second identifier information is associated with a second logical radio node. As will be explained below, the first logical radio node and the second logical radio node may be associated with the same physical logical radio node 140', i.e. the physical logical radio node 140' is configured to provide the first logical radio node and the second logical radio node, or, as another example, the first logical radio node may be associated with a first radio node 140, 140' and the second logical radio node may be associated with a second radio node 140, 140', wherein the first radio node 140, 140' is different from the second radio node 140,140'.

If it is determined that the set of one or more transmission parameters associated with the first identifier information is at least partially different from the set of one or more transmission parameters associated with the second identifier information the device 150 knows that the first identifier information and the second identifier information has both been transmitted to the device 150 according to different sets of one or more transmission parameters.

Each set of two or more sets of one or more transmission parameters of the plurality of sets of one or more transmission parameters are associated with a different positioning quality-of-service, wherein each set of one or more transmission parameters of the plurality of sets of one or more transmission parameters may be associated with a different radio map being associated with a respective positioning quality-of-service. The difference in positioning quality-of-service between the sets of the two or more sets of one or more transmission parameters may result from the fact that each set of these two or more sets of one or more transmission parameters at least partially differs from the remaining set(s) of these two or more set of one or more transmission parameters and therefore transmission quality of a transmission of a identifier information indicative of information allowing a logical radio node of a venue to be identified depends on the set of one or more transmission parameters used for transmitting this identifier information. As an example, the first set of one or more transmission parameters may be associated with better positioning quality-of-service compared to the positioning quality-of-service of the second set of one or more transmission parameters, or vice versa.

Each of the one or more transmission parameters of a set of one or more transmission parameters of the plurality of sets of one or more transmission parameters is indicative of a respective attribute with respect to a communication performed according to respective set of one or more transmission parameters. Thus, each of the one or more transmission parameters may for instance influence how the transmission of information may take place. E.g., with respect to the transmission of the first identifier information each transmission parameter of the set of one or more transmission parameters associated with the first identifier information may for instance influence how the transmission of information may take place and thus may have an impact with respect to positioning quality-of-service provided by a transmission of the first identifier information. Furthermore, for instance, with respect to the transmission of the second identifier information each transmission parameter of the set of one or more transmission parameters associated with the second identifier information may for instance influence how the transmission of information may take place and thus may have an impact with respect to positioning quality-of-service provided by a transmission of the second identifier information.

As an example, each set of one or more transmission parameters from the plurality of sets of one or more transmission parameters comprises one or more of the following parameters i) to iii): i) a transmission power parameter; ii) one or more transmission channel parameters; iii) a transmission interval parameter.

For instance, an increased transmission power parameter of a set of one or more transmission parameters may lead to enhanced positioning quality-of-service since a corresponding signal comprising identifier information indicative of information allowing a logical radio node of a venue to be identified transmitted by radio node 140, 140' according to the set of one or more transmission parameters may lead to better reception of this signal by a device 150 compared to a signal comprising identifier information indicative of information allowing a logical radio node of a venue to be identified transmitted by the same radio node 140, 140' according to another set of one or more transmission parameters comprising a low transmission power parameter compared to said increased transmission power parameter.

As an example, a transmission power parameter may represent one of e.g. six possible transmission power parameters (e.g. which may for instance be pre-defined according to e.g. requirements of an indoor positioning system of a venue). A transmission power parameter may for instance represent one of the following transmission powers 0 to 6: 1) 0 dBm (1 mW transmission power); 2) 5 dBm (approx. 3.2 mW transmission power); 3) 10 dBm (10 mW transmission power); 4) 15 dBm (approx. 31.6 mW transmission power); 5) 20 dBm (100 mW transmission power); or 6) 30 dBm (1000 mW transmission power).

And/or, for instance, a transmission interval parameter of a set of one or more transmission parameters being associated with small intervals may lead to enhanced positioning quality-of-service compared to a transmission interval parameter being associated with longer intervals, since the transmission interval parameter being associated with small intervals may result that the identifier information indicative of information allowing a logical radio node of a venue to be identified transmitted by a radio node 140, 140' according to the set of one or more transmission parameters comprising this transmission interval parameter being associated with small intervals such that the identifier information may be repeatedly transmitted with a higher frequency compared to an identifier information indicative of information allowing a logical radio node of a venue to be identified transmitted by a radio node 140, 140' according to a set of one or more transmission parameters comprising a transmission interval parameter associated with a transmission interval parameter being associated with longer intervals. Thus, more frequently transmitting an identifier information may lead to an enhanced positioning quality-of-service compared to less frequently transmitting an identifier information.

As an example, the transmission interval parameter may for instance be indicative of a transmission interval of the radio node, e.g. how often the radio node transmits e.g. an packet (e.g. an advertisement packet) that notifies nearby devices (e.g. electronic devices) about the radio nodes existence. Based on the transmission interval parameter, e.g. an electronic device being involved in a communication with the radio node, may for instance activate (e.g. turn power on) means for transmitting and/or receiving (e.g. a transceiver) only if one or more signals being sent from the radio node can be received. This may for instance reduce the energy consumption of such an electronic device. The transmission interval parameter may for instance be indicative of a transmission interval, e.g. a value in the unit Hz. For instance a transmission interval parameter may represent one of e.g. six possible transmission interval parameters (e.g. which may for instance be pre-defined, as aforementioned corresponding to the transmission power parameter). The transmission interval parameter may for instance represent one of the following transmission intervals 0 to 6: 1) 1 Hz transmission interval; 2) 2 Hz transmission interval; 3) 3 Hz transmission interval; 4) 4 Hz transmission interval; 5) 5 Hz transmission interval, or 6) 6 Hz transmission interval.

And/or, for instance, one or more transmission channel parameters of a set of one or more may be associated with the bandwidth of the transmission, e.g. the number of channels that are used for transmission or the bandwidth of a channel used for transmission, and/or may be associated with different channel encoding or channel modulation schemes which may differ in transmission quality, and thus different channel parameters may also effect the positioning quality-of-service.

As an example, the one or more transmission channel parameters may for instance be indicative of one or more channels a radio node uses for communicating with another device, e.g. an electronic device. As a minimum, one channel may for instance be used. Further, more than one channel may for instance be used for communicating with another device. For instance, a transmission channel parameter may represent one of a plurality (e.g. seven) of different combinations of possible transmission channels (e.g. which may for instance be pre-defined, as aforementioned corresponding to the transmission power parameter). For instance, it may be chosen between three different transmission channels. Any combination between the three transmission channels may for instance be possible.

In a first action 301 it is determined whether the set of one or more transmission parameters associated with the obtained first identifier information is at least partially different from the set of one or more transmission parameters associated with the obtained second identifier information. Thus, this first step 301 corresponds to step 203 of method 200.

When the set of one or more transmission parameters associated with the obtained first identifier information is at least partially different from the set of one or more transmission parameters associated with the obtained, second identifier information, method 300 proceeds with second step 302. For instance, method 300 may be performed in conjunction with method 200, e.g. at or after step 203 of method 200.

In second action 302, a set of one or more transmission parameters from the set of one or more transmission parameters associated with the obtained first identifier information and the set of one or more transmission parameters associated with the obtained second identifier information is selected.

For instance, the selection may represent a selection of a positioning quality-of-service which is associated with the selected set of one or more transmission parameters, and thus, device 150 may proceed with the selected positioning quality-of-service. E.g., the device 150 may determine a position based at least partially on a radio map for the radio node associated with the selected set of one or more transmission parameters.

As an example, said selecting a set of one or more transmission parameters performed by action 302 may be performed based on a profile stored in the device 150.

For instance, said profile may be associated with at least one set of one or more transmission parameters that are allowed to be used by the device 150, wherein this at least one set of one or more transmission parameters is from the plurality of sets of one or more transmission parameters.

In action 302 it may be checked whether the set of one or more transmission parameters associated with the obtained first identifier information or the set of one or more transmission parameters associated with the obtained second identifier information corresponds to a set of one or more transmission parameters associated with the profile.

For instance, if there is exactly one match, this set of transmission parameters is selected. For instance, device 150 may be only be allowed to use a low positioning quality-of-service which is associated with a specific set of one or more transmission parameters of the plurality of sets of one or more transmission parameters. Then, it may be stored in the profile that device 150 only has access to the specific set of one or more transmission parameters being associated with this low positioning quality-of-service. Or, for instance, device 150 may be only be allowed to use a high positioning quality-of-service which is associated with a specific set of one or more transmission parameters of the plurality of sets of one or more transmission parameters. Then, it may be stored in the profile that device 150 only has access to the specific set of one or more transmission parameters being associated with this high positioning quality-of-service.

Or, for instance, the profile may be associated with at least two sets of one or more transmission parameters of the plurality of sets of transmission parameters, and, in case that device 150 determines that the set of one or more transmission parameters associated with the obtained first identifier information and the set of one or more transmission parameters associated with the obtained second identifier information are both identified according to the profile, device 150 may perform the selecting according step 302 according to specific selection rule. For instance, this selection rule may define that the set of transmission parameters is selected from the set of one or more transmission parameters associated with the obtained first identifier information and the set of one or more transmission parameters associated with the obtained second identifier information which is associated with the higher positioning quality-of-service.

Furthermore, e.g., if no match between the set of one or more transmission parameters associated with the obtained first identifier information and the set of one or more transmission parameters associated with the obtained second identifier information and the at least one set of one or more transmission parameter associated with the profile can be found, then method 300 may go back to step 201 of method 200 if a new first identifier information and/or a new second identifier information may be received by the device 150.

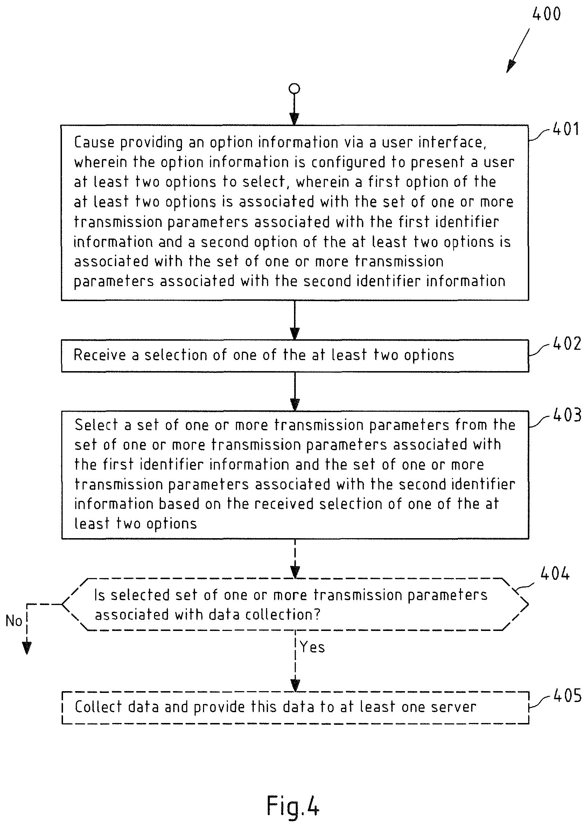

As another example, said selection of a set of one or more transmission parameters according to step 302 may be performed based on a user interaction via a user interface of the device. This example will be explained in more detail with respect to method 400 depicted in Fig. 4.

Furthermore, method 300 comprises a third action 303. In action 303 the device 150 is configured based on the selected set of one or more transmission parameters. Thus, the device 150 may perform a (uni-directional or bi-directional) communication with the logical radio node associated with the selected set of one or more transmission parameters, e.g. for positioning purposes such that the device 150 may determine its position based on a radio map associated with the selected set of one or more transmission parameters.

And/or, as an example, if the selected set of one or more transmission parameter may comprise one or more transmission channel parameters the device 150 may tune it's receiver or transmitter based on the one or more transmission channel parameters. E.g., if the one or more transmission channel parameters indicate that only one sub-channel of a plurality of sub-channels of a communication (e.g. a Bluetooth communication or any other communication using several channels / sub-channels) shall be used, then device 150 may configure its receiver or transmitter to receiver and/or transmit via this sub-channel. Or, if the one or more transmission channel parameters indicate that two or more sub-channel of a plurality of sub-channels of a communication shall be used, then device 150 may configure its receiver or transmitter to receiver and/or transmit via the two or more sub-channels.

And/or, as an example, if the at selected set of one or more transmission parameter may comprise a transmission channel interval parameter the device 150 may tune its receiver or transmitter based on the transmission channel interval parameter. For instance, if the transmission channel interval parameter indicates a 10 Hz transmission (Tx) interval the receiver (or transmitter) of the device 150 may be configured to scan the received signal at 10 times higher rate compared to a transmission channel interval parameter indicating a 1 Hz Tx interval. It has to be understood that at least parts of the receiver (or transmitted) of the device 150 may be realized by means of software, and thus, for example, the scanning rate might be realized by software.

Furthermore, method 300 may optionally comprise a fourth action 304. In optional action 304 the device 150 determine a position based at least partially on a radio map for the radio node associated with the selected set of one or more transmission parameters.

Thus, as an example, if different sets of one or more transmission parameters of the plurality of sets of one or more transmission are associated with different positioning quality-of-services the positioning performed by action 304 is performed according to the positioning quality-of-services associated with the selected set of one or more transmission parameters.

For instance, position estimation may be performed based on a radio map associated with the selected set of one or more transmission parameters being associated respective obtained identifier information, wherein, as an example, at least a part of the identifier information may depend on the set of one or more transmission parameters from the plurality of sets of one or more transmission parameters. For instance, a positioning request for an indoor positioning and/or floor detection may be transmitted (e.g. sent) by the electronic device 150, e.g. to a server (e.g. server 110 of Fig. 1). The positioning request may for instance comprise the identifier information. Based on the identifier information, e.g. the server may provide the corresponding radio map associated with the transmitted identifier information (and thus associated with the selected set of one or more transmission parameters) to the electronic device. Based on the provided radio map, the electronic device may perform position estimation to determine its position respectively location in the venue. And/or, the radio map associated with the selected set of one or more transmission parameters may be stored by the device 150. Or, as another alternative, the electronic device 150 may send the one or more measurements or a part of the one or more measurements to the server 110, which then may access the radio map database associated with the identifier information (which may be included in the positioning request transmitted by the electronic device) and may perform the required computations to estimate the position of the electronic device 150 and the the server 110 may transmit information on the estimated position the electronic device 150.

Fig. 4 is a flowchart showing an example embodiment of a method according to the second exemplary aspect of the present invention. This flowchart 400 may for instance be performed by device 150 of Fig. 1. For instance, action 302 of method 300 may be performed by flowchart 400 if said selecting a set of one or more transmission parameters is performed based on a user interaction.

In a first action 401 it may be caused (e.g. by device 150) to provide an option information via a user interface (e.g. the user interface of device 150 or a user interface associated with device 150), wherein the option information is configured to present a user at least two options to select, wherein a first option of the at least two options is associated with the set of one or more transmission parameters associated with the first identifier information and a second option of the at least two options is associated with the set of one or more transmission parameters associated with the second identifier information. Thus, action 401 may cause that the option information is presented via the user interface to a user. E.g., this user interface may be a touchscreen or a display or any other well-suited user interface.

Thus, for instance, it may be signaled to a user via the user interface that there are two options to select on how to proceed, e.g. with respect to positioning based on the set of one or more transmission parameters associated with the first identifier information or based on the set of one or more transmission parameters associated with the second identifier information. For instance, if different sets of one or more transmission parameters of the plurality of sets of one or more transmission are associated with different positioning quality-of-services, the option information may indicate a positioning of quality-of-services associated with the set of one or more transmission parameters associated with the first identifier information and may indicate a positioning of quality-of-services associated with the set of one or more transmission parameters associated with the second identifier information. Therefore, a user may be informed that there are two different positioning of quality-of-services available and the one of the two different positioning of quality-of-services can be selected, e.g. by a user interaction with the user interface presenting the option information or by another user interface of the device 150 or another user interface associated with the device 150. Furthermore, as an example, option information may comprise further information, e.g. that the higher positioning of quality-of-services of the positioning of quality-of-service associated with the set of one or more transmission parameters associated with the first identifier information and the positioning of quality-of-service associated with the set of one or more transmission parameters associated with the second identifier information is associated with data collection of the device 150, e.g. data exchange for analytics or crowd-sourcing data. Thus, a user is informed that the higher positioning of quality-of-services at the same time will lead to data exchange which may lead that an application of the device 150 collects analytics and probe data from the user device, wherein the data e.g. be used to update a crowd-source radio node database. Accordingly, selecting the higher positioning of quality-of-services may lead to increased performance of the radio node database since this databased can be updated with more probe data and/or may use analytics which then may lead to better positing quality when using the updated radio node database. Furthermore, it may be considered that the set of one or more transmission parameters associated with the higher positioning of quality-of-services is associated with data collection.

In a second action 402 a selection of one of the at least two options is received, e.g. based on a user interaction with the user interface presenting the option information or by another user interface of the device 150 or another user interface associated with the device 150, wherein the user interface that receives a selection input may provide the selection to device 150. For instance, a signal representative of the selection of one of the at least two options may be received from the user interface in response to a user interaction. Thus, for instance, as explained above, a user may be informed that there are two different positioning of quality-of-services available via the user interface and the user may select one of the two different positioning of quality-of-services via the user interface.

In a second action 403 a set of one or more transmission parameters is selected from the set of one or more transmission parameters associated with the first identifier information and the set of one or more transmission parameters associated with the second identifier information.

Furthermore, optionally and as an example, if a set of one or more transmission parameters is selected in action 403 which is associated with data collection, e.g. said set of one or more transmission parameters associated with the higher positioning of quality-of-services, flowchart may comprise and perform an optional third action 405. In third action 403 device 150 collects data and provides at least a part of this data (or all the data) to at least one server, e.g. server 110. For instance, this collecting data may comprise data exchange for analytics or crowd-sourcing data, e.g. analytics and probe data from the device 150, wherein the data e.g. be used to update a crowd-source radio node database.

Accordingly, selecting the higher positioning of quality-of-services may lead to increased performance of the radio node database since this database can be updated with more probe data and/or may use analytics which then may lead to better positing quality when using the updated radio node database. Furthermore, it may be considered that the set of one or more transmission parameters associated with the higher positioning of quality-of-services is associated with data collection.

Fig. 5a is a flowchart 500a showing an example embodiment of a method according to the first exemplary aspect of the present invention. This flowchart 500a may for instance be performed by device 150 of Fig. 1. For instance, the flowchart 500a may be performed before method 200 is performed or may be performed as part of action 201 of method 200. Fig 5b shows an example embodiment of an apparatus 550 according to the first exemplary aspect of the present invention and an example embodiment of an apparatus 570 according to the second exemplary aspect of the present invention, wherein the apparatus 550 according to the first exemplary aspect of the present invention may be the device 150 of Fig. 1 and the apparatus 570 according to the second exemplary aspect of the present invention may be a radio node 140 of Fig. 1. Fig. 5b is a flowchart 500c showing an example embodiment of a method according to the second exemplary aspect of the present invention. This flowchart 500c may for instance be performed by radio node 140 of Fig. 1 or by apparatus 570 of Fig. 5b.

In a first step 501, a signal representation 560 is received, e.g. by device 550 depicted in Fig. 5b, the signal representation 560 comprising the first identifier information indicative of information allowing a logical radio node of a venue to be identified and comprising the second identifier information indicative of information allowing a logical radio node of a venue to be identified. For instance, this signal representation may be received by a communication interface 551 device 550, wherein, as an example, this communication interface 551 may comprise exactly one antenna or two or more antennas such that the signal representation 560 is received via this exactly one antenna or the two or more antennas.

In said signal representation 560 the first identifier information is transmitted based on the set of one or more transmission parameters associated with the first identifier information and the second identifier information is transmitted based on the set of one or more transmission parameters associated with the second identifier information.

Apparatus 570 may be configured to transmit this signal representation 560. As an example, apparatus 570 may be configured to provide at least two logical radio nodes. For instance, a first logical radio node of apparatus 570 may be associated with the first set of one or more transmission parameters and a second logical radio node of the respective radio 140 of the at least one radio node 140 may be associated with the second set of one or more transmission parameters. Apparatus 570 is further configured broadcast each of the two or more identifier information in a signal representation 560, wherein the apparatus 570 is configured to transmit the first identifier information in accordance with the set of one or more transmission parameters associated with the first identifier information in said signal representation 560 and to transmit the second identifier information in accordance with the set of one or more transmission parameters associated with the second identifier information in said signal representation. Thus, an apparatus 570 being associated with two identifier information may represent one physical radio node 570, e.g. one physical device, but may be configured to act as two logical radio nodes, wherein the radio node 570 is configured to transmit for each of the two or more logical radio nodes a respective identifier information indicative of information allowing the respective logical radio node of a venue to be identified. For instance, apparatus 570 may be configured to transmit the signal representation 560 via a communication interface 571 of the apparatus 570, wherein, as an example, this communication interface 571 may comprise exactly one antenna or two or more antennas such that the signal representation 560 is transmitted received via this exactly one antenna or the two or more antennas by apparatus 570.

Apparatus 570 is configured to transmit the first identifier information and said second identifier information in said signal representation 560 in such a way that the first identifier information and the second identifier information do not interfere with each other or only have less interference such that a receiving apparatus, e.g., apparatus 550, can obtain the first identifier information and the second identifier information from the received signal representation 560.

As an example, said signal representation 570 is based on a multiplexing of a transmission of the first identifier and the transmission of the second identifier. Thus, the transmission of the first identifier and the transmission of the second identifier may be multiplexed in said signal representation 570 in such a way that the transmission of the first identifier information and the transmission of the second identifier information do not interfere with each other or only have less interference with each other.

For instance, said multiplexing may be performed based on at least one of the following multiplexing schemes i) to iii):
i) time division multiplexing,
ii) frequency division multiplexing, and
iii) code division multiplexing.

As an example, said time division multiplexing may be performed based on at least one transmission interval parameter of the set of one or more transmission parameters associated with the first identifier information and/or based on at least one transmission interval parameter of the set of one or more transmission parameters associated with the second identifier information.

For instance, a first sub-signal comprising the first identifier and a second sub-signal comprising the second identifier may be multiplexed based on a time division scheme such that the signal representation 560 is generated, which comprises the first sub-signal and the second signal-signal. As an example, the first sub-signal may represent or may be created based on a transmission package comprising the first identifier and the second sub-signal may represent or may be created based on a transmission package comprising the second identifier.

The set of one or more transmission parameters associated with the first identifier information may comprise a transmission interval parameter being indicative of a first repetition time, wherein the first sub-signal may be regularly transmitted based on the transmission interval parameter. The set of one or more transmission parameters associated with the second identifier information may comprise a transmission interval parameter being indicative of a second repetition time, wherein the second sub-signal may be regularly transmitted based on the transmission interval parameter, and wherein the second repetition time may be different from the first repetition time.

For instance, the first sub-signal is transmitted n-times according to first repetition time (with n being an integer of 1, 2, 3, ... ) and then the second sub-signal is transmitted n-times according to the second repetition time (with n being an integer of 1, 2, 3, ... ). Then, as an example, the first sub-signal may transmitted once again n-time according to first repetition time and the second sub-signal may transmitted once again n-time according to second repetition time, such that the first sub-signal and the second sub-signal are multiplexed by a time-division multiplexing scheme based on the transmission interval parameter of the set of one or more transmission parameters associated with the first identifier information and based on the transmission interval parameter of the set of one or more transmission parameters associated with the first identifier information.

For instance, if the first repetition time is 1 and the second repetition time is 10, the first sub-signal may be transmitted once and then the second sub-signal may be transmitted ten times. Thus, an alternating transmission of 1-time transmitting the first sub-signal and 10-times transmitting the second sub-signal may be performed by the apparatus 570 in order to generate the signal representation 560. In this example, the second repetition time is associated with a shorter transmission interval than the first repetition time which may lead to enhanced positioning quality-of-service with respect to the transmission of the second identifier compared to the transmission of the first identifier. Of course, any other well-suited values for the first and second repetition time may be applied.

Furthermore, as an example, the repetition time may represent a transmission (Tx) frequency interval, e.g. in terms of Hertz (Hz). For instance, the first repetition time may be a 1 Hz Tx interval and the second repetition time may be a 10 Hz Tx interval. Then, the first sub-signal may be transmitted once a second and afterwards the second sub-signal may be transmitted ten times a second. Accordingly, the transmission interval of the transmission of the second identifier is smaller than the transmission interval of the transmission of the first identifier. Of course, any other well-suited values for the first and second repetition time may be applied.

Thus, for instance, a transmission interval parameter of a set of one or more transmission parameters being associated with small intervals (e.g. the above mentioned second repetition time) may lead to enhanced positioning quality-of-service compared to a transmission interval parameter being associated with longer intervals (e.g. the above mentioned first repetition time), since the transmission interval parameter being associated with small intervals may result that the identifier information indicative of information allowing a logical radio node of a venue to be identified transmitted by apparatus 570 according to the set of one or more transmission parameters comprising this transmission interval parameter is associated with small intervals such that the identifier information may be repeatedly transmitted with a higher frequency compared to an identifier information indicative of information allowing a logical radio node of a venue to be identified transmitted by the apparatus 570according to a set of one or more transmission parameters comprising a transmission interval parameter associated with a transmission interval parameter being associated with longer intervals. Thus, more frequently transmitting an identifier information may lead to an enhanced positioning quality-of-service compared to less frequently transmitting an identifier information.

And/or, as an example, said frequency division multiplexing may be performed based on at least one transmission channel parameter of the set of one or more transmission parameters associated with the first identifier information and/or based on at least one transmission channel parameter of the set of one or more transmission parameters associated with the second identifier information.

For instance, one or more transmission channel parameters of a set of one or more may be associated with the bandwidth of the transmission, e.g. the number of channels that are used for transmission or the bandwidth of a channel used for transmission, and/or may be associated with different channel encoding or channel modulation schemes which may differ in transmission quality, and thus different channel parameters may also effect the positioning quality-of-service.

E.g., the one or more transmission channel parameters of the set of one or more transmission parameters associated with the first identifier information may indicate that only one sub-channel of a plurality of sub-channels of a communication (e.g. a Bluetooth communication or any other communication using several channels / sub-channels) shall be used, and thus, the apparatus 570 is configured to transmit the first identifier in said sub-channel indicated by the one or more transmission channel parameters associated with the first identifier as the first sub-signal. And/or, for instance, the one or more transmission channel parameters of the set of one or more transmission parameters associated with the first identifier information may indicate that two or more sub-channels of a plurality of sub-channels of a communication shall be used, and thus, the apparatus 570 is configured to transmit the second identifier in said two or more sub-channels indicated by the one or more transmission channel parameters associated with the second identifier as the second sub-signal.

Furthermore, it has to be understood, for instance, that each sub-channel of at least one sub-channel indicated by the one or more transmission channel parameters of the set of one or more transmission parameters associated with the first identifier information may be equal to a respective sub-channel of at least one sub-channel indicated by the one or more transmission channel parameters of the set of one or more transmission parameters associated with the second identifier information.

For instance, the one or more transmission channel parameters of the set of one or more transmission parameters associated with the first identifier information may indicate that only one sub-channel of a plurality of sub-channels of a communication (e.g. a Bluetooth communication or any other communication using several channels / sub-channels) shall be used and the one or more transmission channel parameters of the set of one or more transmission parameters associated with the second identifier information may indicate that each sub-channel of the plurality of sub-channels of the communication are used. This is also considered to represent a frequency division multiplexing.

As an example, the first set of one or more transmission parameters of the plurality of sets of transmission parameters may be associated with better positioning quality-of-service compared to the positioning quality-of-service of the second set of one or more transmission parameters of the plurality of one or more transmission parameter, wherein, for instance, the first set of one or more transmission parameters may comprise at least one transmission parameter of (i) a transmission power parameter indicating a transmit power of +5 dBm and (ii) a transmission interval parameter indicating a 10 Hz transmission interval; and, wherein, for instance, the second set of one or more transmission parameters may comprise at least one transmission parameter of (i) a transmission power parameter indicating a transmit power of +0 dBm and (ii) a transmission interval parameter indicating a 1 Hz transmission interval. It has to be understood that other well suited transmission parameter may be applied.

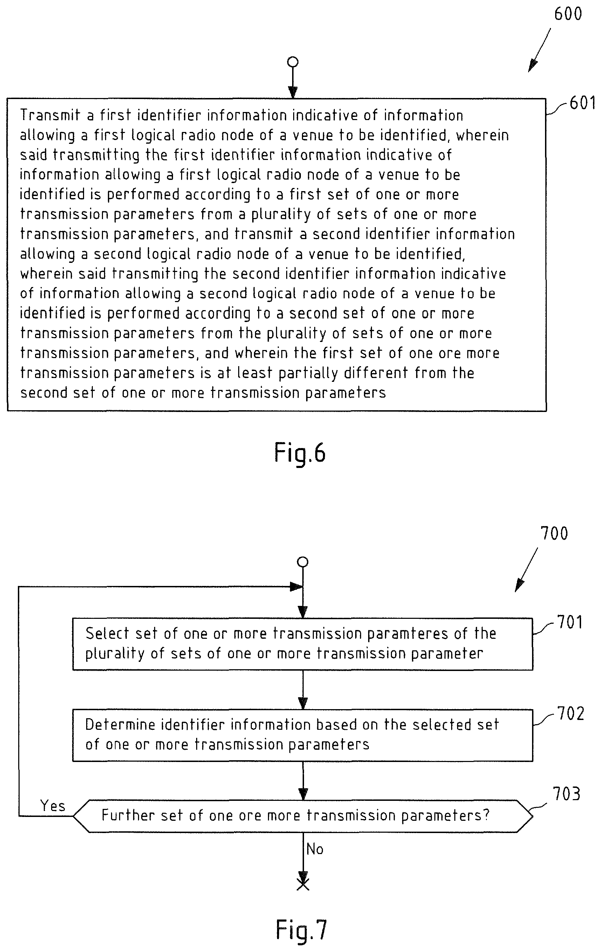

Fig. 6 is a flowchart 600 showing an example embodiment of a method according to the second exemplary embodiment of the present invention. This flowchart 600 may for instance be performed by radio node 140 of Fig. 1.

In a first action 601, a first identifier information indicative of information allowing a first logical radio node of a venue to be identified is transmitted, wherein said transmitting the first identifier information indicative of information allowing a first logical radio node of a venue to be identified is performed according to a first set of one or more transmission parameters from a plurality of sets of one or more transmission parameters, and a second identifier information allowing a second logical radio node of a venue to be identified is transmitted, wherein said transmitting the second identifier information indicative of information allowing a second logical radio node of a venue to be identified is performed according to a second set of one or more transmission parameters from the plurality of sets of one or more transmission parameters, and wherein the first set of one or more transmission parameters is at least partially different from the second set of one or more transmission parameters. At least a part of each identifier information of at least one identifier information of the first identifier information and the second identifier information depends on the set of one or more transmission parameters associated with the respective identifier information.

The plurality of sets of one or more transmission parameters may represent the plurality of sets of one or more transmission parameters according to the first exemplary embodiment of the invention. Thus, all explanations presented with respect to the plurality of sets of one or more transmission parameters according to the first exemplary embodiment of the invention may also hold for the plurality of sets of one or more transmission parameters according to the second exemplary embodiment of the invention.

As an example, the first set of one or more transmission parameters may be associated with better positioning quality-of-service compared to the positioning quality-of-service of the second set of one or more transmission parameters, or vice versa.

For instance, a radio node performing flowchart 600 may be each radio node 140 of the at least one radio node 140 of Fig. 1 being associated with two or more identifier information which is configured to broadcast each of the two or more identifier information associated with the respective radio node 140. Such a respective radio node 140 is configured to transmit the first identifier information indicative of information allowing a first logical radio node of a venue to be identified according to the first set of one or more transmission parameters from the plurality of sets of one or more transmission parameter and is configured to transmit the second identifier information indicative of information allowing a second logical radio node of a venue to be identified according to the second set of one or more transmission parameters from the plurality of sets of one or more transmission parameter. Thus, this radio node 140 (which may be considered to represent one physical radio node 140) provides two logical radio nodes which may be received by one or more of the devices 150. It has to be understood that the invention is not limiting to providing two logical radio nodes by one radio node 140, but may also comprise at least one radio node 140 providing two or more logical radio nodes.

A radio node 140 is configured according to the first set of one or more transmission parameters associated with the first identifier information and according to second set of one or more transmission parameters associated with the second identifier information. For instance, said first set of one or more transmission parameters associated with the first identifier information and said second set of one or more transmission parameters associated with the second identifier information may be received at respective radio node 140 from a server, e.g. from server 110, or, as another example, said first set of one or more transmission parameters associated with the first identifier information and said second set of one or more transmission parameters associated with the second identifier information may be determined by the respective radio node 140.

As an example, the method according to the second exemplary embodiment of the present invention may comprise, for each identifier information of at least one identifier information of the first identifier information and the second identifier information: determining the respective identifier information based on the set of one or more transmission parameters associated with the respective identifier information.

The identifier information of a set of one or more transmission parameters is indicative of a logical radio node of the venue. Thus, the determined identifier information may be different from another identifier information, which is determined based on a further set of one or more transmission parameters from the plurality of sets of one or more transmission parameters, which is different from the one used for determining the identifier information, while both identifier information are determined for the same radio node (e.g. of the venue). Alternatively, the determining of the identifier information may for instance be performed manually. It must be ensured that the determined identifier information allow the logical radio node to be identified and the determined identifier information must be different for each (possible) set of one or more transmission parameters, based on which the identifier information is determined.

It will be understood that the identifier information may for instance be determined based on further information, not exclusively based on the set of one or more transmission parameters of the plurality of sets of one or more transmission parameters.

Fig. 7 is a flowchart 700 showing an example embodiment of a method according to the second exemplary embodiment of the present invention. This flowchart 700 may for instance be performed by radio node 140 or by server 110 of Fig. 1.

In a first action 701, a set of one or more transmission parameters of the plurality of sets of one or more transmission parameters is selected. For instance, at first this may be the set of one or more transmission parameters that is considered to be associated with a first logical radio node.

In a second action 702, identifier information indicative of a logical radio node of a venue is determined based on the selected set of one or more transmission parameters, e.g. as mentioned above.

Then, in a third action 703, it may be checked whether there is a further set of one or more transmission parameters of the plurality of sets of radio nodes, e.g. that is considered to be associated with a further logical radio node (e.g. the second logical radio node). If yes flowchart 700 returns to action 701.

As an example of the first and second exemplary embodiment of the present invention, each set of the first set of one or more transmission parameters and the second set of one or more transmission parameters is associated with a respective discrete value, wherein each set of the first set of one or more transmission parameters and the second set of one or more transmission parameters comprises a combination of more than one transmission parameters and wherein the respective discrete value is indicative of a value from a finite number of values.

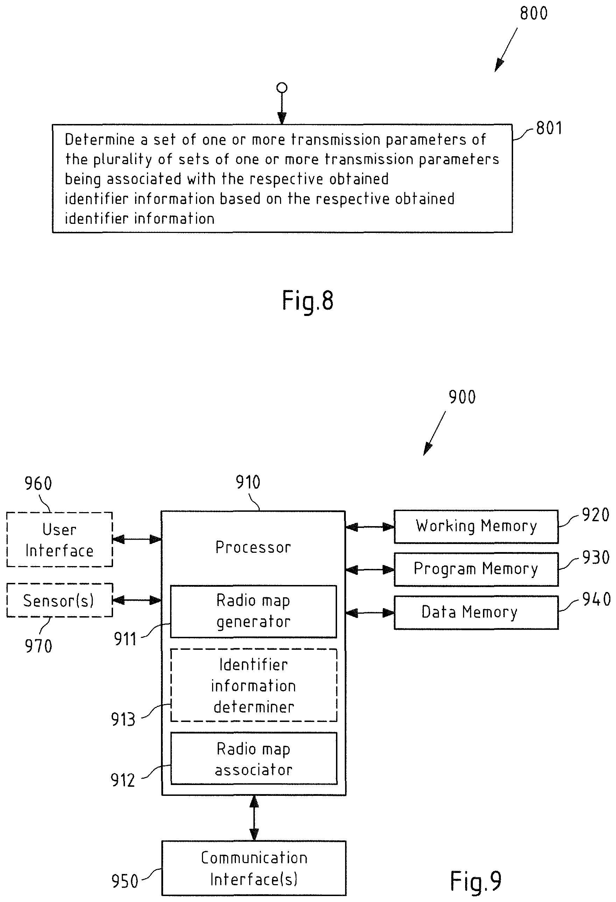

The discrete value may for instance be associated with the set of one or more transmission parameters in a memory, e.g. a database. Such a database may for instance comprise a look-up table, wherein a plurality of discrete values may for instance be associated with a set of one or more transmission parameters. Further, the discrete value may for instance be associated with a set of one or more transmission parameters from the plurality of sets of one or more transmission parameters in the memory. For instance, corresponding to the set of one or more transmission parameters, a discrete value may be associated with the set of one or more transmission parameters, wherein based on the discrete value, the set of one or more transmission parameters may for instance be identifiable. For instance, at least one set of one or more transmission parameters (e.g. the first set of one or more transmission parameters and/or the second set of one or more transmission parameters ) may for instance be chosen to be provided, e.g. to a radio node 140, 140' (e.g. the radio node 140) of the venue and/or an electronic device 150, the discrete value being associated with the set of one or more transmission parameters may for instance be determined corresponding to the associations e.g. in the look-up table stored in the memory. For instance, this memory may be implemented by memory 1120 or memory 1130 or memory 1140 depicted in Fig. 11 and/or may be implemented by memory 920 or memory 930 or memory 940 depicted in Fig. 9.

The finite number of values of the discrete value may for instance be corresponding to the number of possible combinations of combining the one or more respective transmission parameters with each other, or corresponding to the number of the plurality of sets of one or more transmission parameters.

The discrete value may for instance be represented by a code, a letter or the like to name but a few non limiting examples. For instance, the discrete value may be represented by an integer value. The integer value may for instance be transformed into a binary value. Further, the discrete value may for instance be a hexadecimal value. The hexadecimal value may for instance be transformed into a binary value. Alternatively, the discrete value may for instance be represented by a binary value. It will be understood that the discrete value being represented by a code can be transformed into a binary or hexadecimal value as well.

The discrete value may for instance be representing 16 different values, e.g. in a hexadecimal value bit ranging from 0 to F. Each value of the hexadecimal value bit may for instance represent a set of one or more transmission parameters from the plurality of sets of one or more transmission parameters.

As an example of the first and second exemplary embodiment of the present invention, at least a part of the identifier information of at least one identifier information of the first identifier information and the second identifier information is ownership information, wherein the ownership information is indicative of one or more radio nodes of a company or an owner of the one or more radio nodes, and at least another part of the identifier information of at least one identifier information of the first identifier information and the second identifier information is instance information, wherein the instance information is indicative of an identification of a radio node of the one or more radio nodes of the company or the owner of the one or more radio nodes.

Thus, the company or the owner may for instance be identified at first, wherein the company of the owner may for instance have more than one beacons. Then, within all logical radio nodes belonging to the company or the owner, a specific logical radio node may for instance be identified based on the instance information of the identifier information. Furthermore, one physical radio node 140, 140' may be considered to the belong the same company or owner, and thus, the first identifier information and the second identifier information associated with a radio node 140 may comprise the same ownership information.

As an example of the first and second exemplary embodiment of the present invention, the instance information is divided into a plurality of upper bits and a plurality of lower bits.

The plurality of upper bits of the instance information may for instance comprise at least two bits. The plurality of lower bits of the instance information may for instance comprise at least two bits. The total length of the plurality of upper bits and/or the plurality of lower bits of the instance information may for instance be pre-defined or determined according to pre-defined rules. For instance, the total length of the plurality of lower bits of a identifier information (e.g. the identifier information) of a beacon according to BLE communication standard may be 4 or 8 bits, or 1, 2, 3, 4, 5, or 6 bytes. The total length of the plurality of lower bits of a identifier information (e.g. the identifier information) may for instance depend on the protocol used for broadcasting the identifier information by the radio node.

As an example of the first and second exemplary embodiment of the present invention, the instance information comprises the discrete value.

The discrete value may for instance be inserted into the instance information of the identifier information. For instance, the discrete value may for instance be represented by one or more bits of the identifier information located in the instance information of the identifier information. The one or more bits of the identifier information may for instance be placed at a pre-defined or determined according to pre-defined rules position of the identifier information.

The discrete value represented by one or more bits may for instance be inserted into the plurality of lower bits of the identifier information. Alternatively, the discrete value represented by one or more bits may for instance be comprised by the plurality of lower bits of the identifier information.

Fig. 8 is a flowchart 800 showing an example embodiment of a method according to the first exemplary embodiment of the present invention. For instance, this method may be performed by device 150 of Fig. 1 or by device 550 of Fig 5b.

In a first action 801, a set of one or more transmission parameters of the plurality of sets of one or more transmission parameters being associated with a respective obtained identifier information is determined based on the respective obtained identifier information.

For instance, this respective obtained identifier information may be the obtained first identifier information obtained during action 201 of method 200 in Fig. 2 or this respective obtained identifier information may be the obtained second identifier information obtained during action 202 of method 200. E.g., action 201 may be performed for each of the obtained first and second identifier information.

As an example, during action 801, the set of one or more transmission parameters of the plurality of sets of one or more transmission parameters being associated with the respective obtained identifier information may be determined based on a memory, e.g. a database (e.g. comprising a look-up table), which may comprise a link between a set of one or more transmission parameters of the plurality of sets of one or more transmission parameter and the at least one identifier information associated with the set of one or more transmission parameters. E.g., the memory may comprise for each set of at least one set of one or more transmission parameters of the plurality of sets of one or more transmission parameter a link to each of at least one identifier information associated with respective set of one or more transmission parameter. The memory may for instance be comprised by the server (e.g. server 110 of Fig. 1, and/or e.g. implemented by memory 920 or memory 930 or memory 940 depicted in Fig. 9) or be connected to the server. Additionally or alternatively, the memory may for instance be comprised by or be connected to a hub (e.g. one of the hubs 130 of Fig. 1, and/or e.g. implemented by memory 1020 or memory 1030 or memory 1040 depicted in Fig. 10) having a communication connection to one or more radio nodes of the venue, which are to be provided with the determined one or more transmission parameters. Additionally or alternatively, the memory may for instance be comprised by to be connected to the device 150 of Fig. 1, e.g. implemented by memory 1120 or memory 1130 or memory 1140 depicted in Fig. 11. Then, based on the memory, device 150 may determine the set of one or more transmission parameters associated with the respective obtained transmission parameter.

As an example, action 801 may comprise determining a discrete value based on the respective obtained identifier information, wherein the discrete value is indicative of a value from a finite number of values; and determining the set of one or more transmission parameters of the plurality of sets of one or more transmission parameters being associated with the respective obtained identifier information based on the determined discrete value.

The respective obtained identifier information may for instance comprise the discrete value. The discrete value may for instance be determined by obtaining the discrete value from the identifier information.

Thus, as an example, the set of one or more transmission parameters of the plurality of sets of one or more transmission parameters being associated with a respective obtained identifier information determined in action 801 may be determined based on the determined discrete value. The one or more transmission parameters may for instance be determined from a memory, e.g. a database, comprising a look-up table, wherein the look-up table comprises one or more transmission parameters being associated with a discrete value, wherein this memory may represent the aboveidentified memory. The memory may for instance be comprised by the server (e.g. server 110 of Fig. 1, and/or e.g. implemented by memory 920 or memory 930 or memory 940 depicted in Fig. 9) or be connected to the server. Additionally or alternatively, the memory may for instance be comprised by or be connected to a hub (e.g. one of the hubs 130 of Fig. 1, and/or e.g. implemented by memory 1020 or memory 1030 or memory 1040 depicted in Fig. 10) having a communication connection to one or more devices 150, which are to be provided with the determined one or more transmission parameters. Additionally or alternatively, the memory may for instance be comprised by to be connected to the device 150 of Fig. 1, e.g. implemented by memory 1120 or memory 1130 or memory 1140 depicted in Fig. 11.

Accordingly, the set of one or more transmission parameters being determined in action 801 is associated with a discrete value so that based on the discrete value the set of one or more transmission parameters is determinable. For instance, each set of one or more transmission parameters at least one set of one or more transmission parameters of the plurality of sets of one or more transmission parameters is associated with at least one discrete value, wherein each of the at least one discrete value makes it possible to determine the respective set of one or more transmission parameters.

Fig. 9 is a schematic block diagram of an apparatus according to an exemplary aspect of the present invention, which may for instance represent server 110 of Fig. 1.

Apparatus 900 comprises a processor 910, working memory 920, program memory 930, data memory 940, communication interface(s) 950, an optional user interface 990 and an optional sensor(s) 970.

Apparatus 900 may for instance be configured to perform and/or control or comprise respective means (at least one of 910 to 970) for performing and/or controlling the method according to the first and/or second exemplary aspect of the invention. Apparatus 900 may as well constitute an apparatus comprising at least one processor (910) and at least one memory (920) including computer program code, the at least one memory and the computer program code configured to, with the at least one processor, cause an apparatus, e.g. apparatus 900 at least to perform and/or control the method according to the first exemplary aspect of the invention.

Processor 910 may for instance comprise a radio map generator 911 as a functional and/or structural unit. Radio map generator 911 may for instance be configured to generate a plurality of radio maps (see step 201 of Fig. 2). For instance, radio map generator 911 may be configured to generate for each set of at least one set of one or more transmission parameters of the plurality of sets of one or more transmission parameters a respective radio map being associated the respective set of one or more transmission parameters. For instance, such a radio map may be generated based at least partially on one or more radio measurements and on one or more position information gathered for a radio node of the at least one radio node 140, 140' which transmits (or broadcasts) according to the set of one or more transmission parameters associated with the respective radio map. For gathering the one or more radio measurements, each radio node 140, 140' of the one or more radio nodes 140, 140' of the venue are configured based on the at least one set of one or more transmission parameters associated with the respective radio node 140, 140' which may result in one or more signals being sent by the respective radio node 140, 140' according to associated at least one set of one or more transmission parameters (of the plurality of sets of one or more transmission parameters). Furthermore, optionally, each radio map of the plurality of radio maps may be associated with a different quality of service regarding positioning, i.e., each set of one or more transmission parameters of at least one set of one or more transmission parameters of the plurality of sets of one or more transmission parameters may be associated with a different quality of service regarding positioning. The plurality of sets of one or more transmission parameters may be stored in a memory, e.g. memory 920, memory 930 or memory 940. Furthermore, all memories explained with respect to the first and/or second exemplary aspect of the invention may be stored in memory 920, 930 or 940.

Processor 910 may for instance comprise a radio map associator 912 as a functional and/or structural unit. Radio map associator 912 may for instance be configured to associate a radio map of the plurality of radio maps with identifier information determine a piece of respective identifier information to be output. Processor 910 may for instance comprise an optional identifier information determiner 913 as an optional functional and/or structural unit. Optional identifier information determiner 913 may for instance be configured to determine identifier information for a logical radio node which is associated with a respective radio map of the plurality of radio maps and thus associated with respective set of one or more transmission parameters of the plurality of sets of one or more transmission parameters.

Furthermore, as an example, a discrete value may for instance be associated with a set of one or more transmission parameters of the plurality of sets of one or more transmission memory in a memory 920, 930, 930, e.g. a database (memory). Such a database may for instance comprise a look-up table, wherein a plurality of discrete values may for instance be associated with a set of one or more transmission parameters. Further, the discrete value may for instance be associated with a set of one or more transmission parameters from the plurality of sets of one or more transmission parameters in the memory. For instance, corresponding to the set of one or more transmission parameters, a discrete value may be associated with the set of one or more transmission parameters, wherein based on the discrete value, the set of one or more transmission parameters may for instance be identifiable. For instance, at least one set of one or more transmission parameters (e.g. the first set of one or more transmission parameters and/or the second set of one or more transmission parameters ) may for instance be chosen to be provided, e.g. to a radio node 140, 140' (e.g. the radio node 140) of the venue and/or an electronic device 150, the discrete value being associated with the set of one or more transmission parameters may for instance be determined corresponding to the associations e.g. in the look-up table stored in the memory.

Processor 910 may for instance further control the memories 920 to 940, the communication interface(s) 950, the optional user interface 960 and the optional sensor(s) 970.

Processor 910 may for instance execute computer program code stored in program memory 930, which may for instance represent a computer readable storage medium comprising program code that, when executed by processor 910, causes the processor 910 to perform the method according to the first and/or second exemplary aspect.

Processor 910 (and also any other processor mentioned in this specification) may be a processor of any suitable type. Processor 910 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 910 may for instance be an application processor that runs an operating system.

Program memory 930 may also be included into processor 910. This memory may for instance be fixedly connected to processor 910, or be at least partially removable from processor 910, for instance in the form of a memory card or stick. Program memory 930 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 930 may also comprise an operating system for processor 910. Program memory 930 may also comprise a firmware for apparatus 900.

Apparatus 900 comprises a working memory 920, for instance in the form of a volatile memory. It may for instance be a Random Access Memory (RAM) or Dynamic RAM (DRAM), to give but a few non-limiting examples. It may for instance be used by processor 910 when executing an operating system and/or computer program.

Data memory 940 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 940 may for instance store one or more respective transmission parameters, one or more discrete values, a look-up table comprising one or more respective transmission parameters and one or more discrete values, wherein the one or more respective transmission parameters may for instance be associated with a discrete value of the one or more discrete values, and/or one or more generated respective radio maps, wherein the one or more generated respective radio map may for instance be associated with a piece of respective identifier information. In this way, a respective radio map may for instance be provided dependent upon one or more respective transmission parameters, based on which one or more respective radio nodes of a venue may be configured to use for a transmission of one or more signals.

Communication interface(s) 950 enable apparatus 900 to communicate with other entities, e.g. with one or more electronic devices 150 of Fig. 1, one or more hubs 130 of Fig. 1, gateway hub 120 of Fig. 1, and/or radio nodes 140, 140' of Fig. 1. The communication interface(s) 950 may for instance comprise a wireless interface, e.g. a cellular radio communication interface and/or a WLAN interface) and/or wire-bound interface, e.g. an IP-based interface, for instance to communicate with entities via the Internet.

User interface 960 is optional and may comprise a display for displaying information to a user and/or an input device (e.g. a keyboard, keypad, touchpad, mouse, etc.) for receiving information from a user.

Sensor(s) 970 are optional and may for instance comprise an accelerometer, a camera, or the like to name but a few non-limiting examples, e.g. to determine further pieces of information, which may for instance be used in a method according to the first and/or second aspect of the present invention.

Some or all of the components of the apparatus 900 may for instance be connected via a bus. Some or all of the components of the apparatus 900 may for instance be combined into one or more modules.

Fig. 10 is a schematic block diagram of an apparatus according to an exemplary aspect of the present invention, which may for instance represent radio node 140 of Fig. 1 or apparatus 570 of Fig. 5b.

Apparatus 1000 comprises a processor 1010, working memory 1020, program memory 1030, data memory 1040, communication interface(s) 1050, an optional user interface 1060 and an optional sensor(s) 1070.

Apparatus 1000 may for instance be configured to perform and/or control or comprise respective means (at least one of 1010 to 1070) for performing and/or controlling the method according to the second exemplary aspect, and, for instance according to the first exemplary aspect. Apparatus 1000 may as well constitute an apparatus comprising at least one processor (1010) and at least one memory (1020) including computer program code, the at least one memory and the computer program code configured to, with the at least one processor, cause an apparatus, e.g. apparatus 1000 at least to perform and/or control the method according to the second exemplary aspect of the invention. For instance, apparatus 1000 may be configured to perform flowchart 600 of Fig. 6.

Processor 1010 may for instance comprise an identifier information transmitter 1011 as a functional and/or structural unit. Identifier information transmitter 1011 may for instance be configured to transmit identifier information (see action 610 of Fig. 6).

Processor 1010 may for instance further control the memories 1020 to 1040, the communication interface(s) 1050, the optional user interface 1060 and the optional sensor(s) 1070.

Processor 1010 may for instance execute computer program code stored in program memory 1030, which may for instance represent a computer readable storage medium comprising program code that, when executed by processor 1010, causes the processor 1010 to perform the method according to the first and/or second exemplary aspect.

Processor 1010 (and also any other processor mentioned in this specification) may be a processor of any suitable type. Processor 1010 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 710 may for instance be an application processor that runs an operating system.

Program memory 1030 may also be included into processor 1010. This memory may for instance be fixedly connected to processor 1010, or be at least partially removable from processor 1010, for instance in the form of a memory card or stick. Program memory 1030 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 1030 may also comprise an operating system for processor 1010. Program memory 1030 may also comprise a firmware for apparatus 1000.

Apparatus 1000 comprises a working memory 1020, for instance in the form of a volatile memory. It may for instance be a Random Access Memory (RAM) or Dynamic RAM (DRAM), to give but a few non-limiting examples. It may for instance be used by processor 1010 when executing an operating system and/or computer program.

Data memory 1040 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 1040 may for instance store one or more respective transmission parameters, one or more discrete values, a look-up table comprising one or more respective transmission parameters and one or more discrete values, wherein the one or more respective transmission parameters may for instance be associated with a discrete value of the one or more discrete values, and/or one or more generated respective radio maps, wherein the one or more generated respective radio map may for instance be associated with a piece of respective identifier information. In this way, a respective radio map may for instance be provided dependent upon one or more respective transmission parameters, based on which one or more respective radio nodes of a venue may be configured to use for a transmission of one or more signals.

Communication interface(s) 1050 enable apparatus 1000 to communicate with other entities, e.g. with one or more electronic devices 150 of Fig. 1, one or more hubs 130 of Fig. 1, gateway hub 120 of Fig. 1, and/or radio nodes 140 of Fig. 1. The communication interface(s) 1050 may for instance comprise a wireless interface, e.g. a cellular radio communication interface and/or a WLAN interface) and/or wire-bound interface, e.g. an IP-based interface, for instance to communicate with entities via the Internet.

User interface 1060 is optional and may comprise a display for displaying information to a user and/or an input device (e.g. a keyboard, keypad, touchpad, mouse, etc.) for receiving information from a user.

Sensor(s) 1070 are optional and may for instance comprise an accelerometer, a camera, or the like to name but a few non-limiting examples, e.g. to determine further pieces of information, which may for instance be used in a method according to the first and/or second exemplary aspect of the present invention.

Some or all of the components of the apparatus 1000 may for instance be connected via a bus. Some or all of the components of the apparatus 1000 may for instance be combined into one or more modules.

Fig. 11 is a schematic block diagram of an apparatus according to an exemplary aspect of the present invention, which may for instance represent electronic device 150 of Fig. 1 or device 550 of Fog. 5b.

Apparatus 1100 comprises a processor 1110, working memory 1120, program memory 1130, data memory 1140, communication interface(s) 1150, an optional user interface 1160 and an optional sensor(s) 1170.

Apparatus 1100 may for instance be configured to perform and/or control or comprise respective means (at least one of 1110 to 1170) for performing and/or controlling the method according to the first exemplary aspect, and, for instance, according to the second exemplary aspect. Apparatus 1100 may as well constitute an apparatus comprising at least one processor (1110) and at least one memory (1120) including computer program code, the at least one memory and the computer program code configured to, with the at least one processor, cause an apparatus, e.g. apparatus 1100 at least to perform and/or control the method according to the third exemplary aspect of the invention.

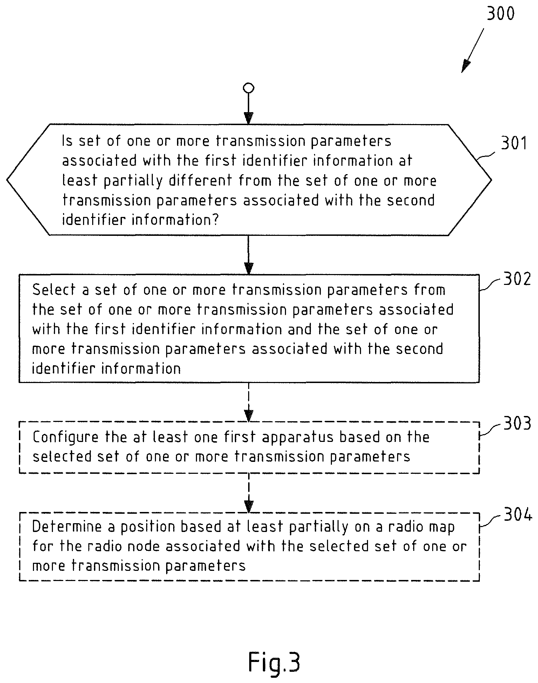

Processor 1110 may for instance comprise a position determiner 1111 as a functional and/or structural unit. Position determiner 1111 may for instance be configured to determine a position (see action 304 of Fig. 3).

Processor 1110 may for instance further control the memories 1120 to 1140, the communication interface(s) 1150, the optional user interface 1160 and the optional sensor(s) 1170. For instance, the communication interface(s) 1150 may comprise the communication interface 571 of apparatus 570 depicted in Fig. 5b.

Processor 1110 may for instance execute computer program code stored in program memory 1130, which may for instance represent a computer readable storage medium comprising program code that, when executed by processor 1110, causes the processor 1110 to perform the method according to the first and/or second exemplary aspect. As an example, processor 1100 may be configured to perform any of the flowcharts 200, 300, 400, 500a, 700 and 800 depicted in Figs. 2, 3, 4, 5a, 7 and 8, respectively.

Processor 1110 (and also any other processor mentioned in this specification) may be a processor of any suitable type. Processor 1110 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 1110 may for instance be an application processor that runs an operating system.

Program memory 1130 may also be included into processor 1110. This memory may for instance be fixedly connected to processor 1110, or be at least partially removable from processor 1110, for instance in the form of a memory card or stick. Program memory 1130 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 1130 may also comprise an operating system for processor 1110. Program memory 1130 may also comprise a firmware for apparatus 1100.

Apparatus 1100 comprises a working memory 1120, for instance in the form of a volatile memory. It may for instance be a Random Access Memory (RAM) or Dynamic RAM (DRAM), to give but a few non-limiting examples. It may for instance be used by processor 1110 when executing an operating system and/or computer program.

Data memory 1140 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 1140 may for instance store one or more respective transmission parameters, one or more discrete values, a look-up table comprising one or more respective transmission parameters and one or more discrete values, wherein the one or more respective transmission parameters may for instance be associated with a discrete value of the one or more discrete values, and/or one or more generated respective radio maps, wherein the one or more generated respective radio map may for instance be associated with a piece of respective identifier information. In this way, a respective radio map may for instance be provided dependent upon one or more respective transmission parameters, based on which one or more respective radio nodes of a venue may be configured to use for a transmission of one or more signals.

Communication interface(s) 1150 enable apparatus 1100 to communicate with other entities, e.g. with one or more electronic devices 150 of Fig. 1, one or more hubs 130 of Fig. 1, gateway hub 120 of Fig. 1, and/or radio nodes 140, 140' of Fig. 1. The communication interface(s) 1150 may for instance comprise a wireless interface, e.g. a cellular radio communication interface and/or a WLAN interface) and/or wire-bound interface, e.g. an IP-based interface, for instance to communicate with entities via the Internet. Communication interface(s) 1150 may comprise communication interface 551 of device 550 depicted in Fig. 5b.

User interface 1160 is optional and may comprise a display for displaying information to a user and/or an input device (e.g. a keyboard, keypad, touchpad, mouse, etc.) for receiving information from a user.

Sensor(s) 1170 are optional and may for instance comprise an accelerometer, a camera, or the like to name but a few non-limiting examples, e.g. to determine further pieces of information, which may for instance be used in a method according to the first and/or second aspect of the present invention.

Some or all of the components of the apparatus 1100 may for instance be connected via a bus. Some or all of the components of the apparatus 1100 may for instance be combined into one or more modules.

The following embodiments shall also be considered to be disclosed:
One use case for local radio node (e.g. beacon) management is changing the radio node transmission (Tx) parameters (Tx power, Tx channels, and Tx interval, for instance how often a radio node transmits an advertisement packet that notifies nearby devices about the radio node existence and on which channels). However, once one or both, or all parameters are changes, the radio signal characteristics is changed, and, hence, the radio map collected earlier for the radio node is no longer valid. Thus, if the radio map collected when the beacon operated with the previous parameters is used when radio node in fact operates with the new parameters, positioning performance will be low.

When the logical radio node Tx power, Tx interval or Tx channel changes, the radio map created for the previous parameters is no longer valid. This is because the increased Tx power changes the power levels observed throughout the radio node coverage area. Moreover, when the Tx power increases (decreases) the radio node coverage area expands (contracts). Therefore, a new radio map is clearly necessary. The increased (or decreased) Tx interval may have an impact on the interference environment and, thus, also an impact to the radio map. Similarly, different Tx channels (different frequencies) may propagate a little bit differently leading to different signal strength patterns depending upon which channel is used.

Now, a logical radio node has two identities: static physical address is the MAC address and on the logical level a radio node is identified by e.g. a Beacon ID (Eddystone: Namespace & Instance ID; iBeacon: UUID & Major ID & Minor ID). As the latter one is freely configurable, it is advantageous to change the Beacon ID, when the Tx parameters change. The physical radio node is the same (MAC address not changed), but the logical ID gets changed.

When the logical radio node radio map is tied to the logical Beacon ID instead of the radio node MAC address, changing the logical Beacon ID automatically allocates a separate radio map for the new logical Beacon ID, although the physical radio node is the same. This feature can be used to isolate different sets of Tx parameters from each other in the radio map level: for each radio node have one Beacon ID related to one Tx parameter set, and another Beacon ID for another set of Tx parameters.

Therefore, because it is known that the radio signal field created by the radio node changes, when the Tx parameters change, it is advantageous to change the radio node logical Beacon ID, whenever the Tx parameters change. This way separate radio node radio maps get created for different Tx parameter sets.

The workflow may be as follows:
When setting up an indoor positioning system:
- collect radio data with the first configuration;
- reconfigure logical radio nodes to use another Tx parameter set
   → logical radio nodes IDs change (manual or automatic);
- collect radio data with the second configuration
   → new set of radio node radio maps generated automatically
   (repeat for all the Tx parameter sets to be used).

Notice that the positioning system itself does not need to know about the reconfiguration:
Once the Tx parameters change and the Beacon IDs get changed at the same time, new logical radio node radio maps will be created automatically. This, hence, isolates the previous configuration from the new one in the radio map level.

In the positioning phase:
- The device to be positioned observes logical radio nodes with certain logical IDs. The algorithms utilize the radio maps associated with those beacon IDs.
   → device does not need to know the Tx parameters; the algorithms simply pick the correct radio maps using the logical IDs. Nevertheless, based on using the logical IDs the device can determine whether the set of plurality of transmission parameters associated with the obtained first ID (first identifier information) is at least partially different from the set of plurality of transmission parameters associated with the obtained second ID (second identifier information), e.g. even without explicit knowledge on the respective sets of one ore transmission parameters.

### Notes:

- For instance, the system must remember the Beacon IDs used for different configurations for each logical radio node. This is because when the radio node Tx parameters are changed after the setup phase so that the radio maps corresponding to the particular Tx parameter set are correctly found from the database during the positioning phase.

### About Beacon IDs:

The beacon IDs may be defined as follows for e.g. Google's Eddystone and Apple's iBeacon radio nodes (e.g. beacons):

| **Eddystone:** | | |
|---|---|---|
| Namespace | 10 bytes | Identifies e.g. the company or the owner of the radio node |
| Instance ID | 6 bytes | Identifies the logical radio node belonging to the namespace |

| **iBeacon:** | | |
|---|---|---|
| UUID | 16 bytes | Identifies e.g. the company or the owner of the radio node |
| Major ID | 2 bytes | Identifies a group of logical radio nodes; can be e.g. a building or floor(s) |
| Minor ID | 2 bytes | Identifies the logical radio node in the group |

### Advantage(s):

The described mechanism provides a way to provide two (or more) positioning quality-of-service from the same set of beacons. Thus, the configurations of the beacons may provide different positioning quality-of-service to an end user and the configuration differ at least one transmission parameter, e.g. TX power, and/or TX channels and/or TX interval. Then, for instance, a client application (e.g. running on device 150 or device 550) can receive and interpret the difference between configurations and use them in best possible way by adjusting the client behaviour. As an example, positioning quality-of-service may be provided to the user as per user profile.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented, with the claims defining the intended scope of protection.

## Claims

1. A first method (200), performed by at least one first apparatus (150, 1100), comprising:
- obtaining (201) first identifier information indicative of information allowing a logical radio node of a venue to be identified, wherein the first identifier information is associated with a set of one or more transmission parameters from a plurality of sets of one or more transmission parameters, wherein each transmission parameter of the set of one or more transmission parameters associated with the first identifier information is indicative of a respective attribute with respect to a communication of the logical radio node transmitting the first identifier information in the venue;
- obtaining (202) second identifier information indicative of information allowing a second logical radio node of the venue to be identified, wherein the second identifier information is associated with a second set of one or more transmission parameters from the plurality of sets of one or more transmission parameters, wherein each transmission parameter of the set of one or more transmission parameters associated with the second identifier information is indicative of a respective attribute with respect to a communication of the second logical radio node transmitting the second identifier information in the venue;
- determining (203, 301) whether the set of one or more transmission parameters associated with the first identifier information is at least partially different from the set of one or more transmission parameters associated with the second identifier information, **characterized in that** (i) the set of one or more transmission parameters from the plurality of sets of one or more transmission parameters and (ii) the second set of one or more transmission parameters from the plurality of sets of one or more transmission parameters are associated with different positioning quality-of-services, and the method further comprises, when (301) the set of one or more transmission parameters associated with the first identifier information is at least partially different from the set of one or more transmission parameters associated with the second identifier information:
- selecting (302) a set of one or more transmission parameters from the set of one or more transmission parameters associated with the first identifier information and the set of one or more transmission parameters associated with the second identifier information, and
- configuring (303) the at least one first apparatus based on the selected set of one or more transmission parameters.

2. The method according to any of claims 1, wherein a first set of one or more transmission parameters of the plurality of sets of one or more transmission parameters is associated with a medium positioning quality-of-service and wherein a second set of one or more transmission parameters of the plurality of sets of one or more transmission parameters is associated with a high positioning quality-of-service, and the method further comprises, when said second set of one or more transmission parameters associated with a high positioning quality-of-service is selected, collecting data and, optionally, causing (405) providing at least a part of the collected data to a server.

3. The method according to claim 2, wherein said selecting a set of one or more transmission parameters is performed based on one of:
- a profile stored in said at least one first apparatus; and
- a user interaction via a user interface of the at least one apparatus.

4. The method according to any of claims 1 to 3, wherein, when the set of one or more transmission parameters associated with the first identifier information is at least partially different from the set of one or more transmission parameters associated with the second identifier information, the method further comprises:
- causing (401) providing an option information via a user interface of the at least one first apparatus, wherein the option information is configured to present a user at least two options to select, wherein a first option of the at least two options is associated with the set of one or more transmission parameters associated with the first identifier information and a second option of the at least two options is associated with the set of one or more transmission parameters associated with the second identifier information, and
- receiving (402) a selection of one of the at least two options.

5. The method according to any of claims 1 to 4, wherein each set of one or more transmission parameters of the plurality of sets of one or more transmission parameters is associated with a different positioning quality-of-service.

6. The method according to any of claims 1 to 5, wherein said determining whether the set of one or more transmission parameters associated with the first identifier information is at least partially different from the set of one or more transmission parameters associated with the second identifier information is performed based on the obtained first identifier information and the obtained second identifier information, wherein the method comprises, optionally, for each of the obtained first and second identifier information:
- determining (801) the set of one or more transmission parameters of the plurality of sets of one or more transmission parameters being associated with the respective obtained identifier information based on the respective obtained identifier information.

7. The method according to claim 6, comprising for each of the obtained first and second identifier information:
- determining a discrete value based on the respective identifier information, wherein the discrete value is indicative of a value from a finite number of values;
- determining the set of one or more transmission parameters of the plurality of sets of one or more transmission parameters being associated with the respective obtained identifier information based on the determined discrete value;
wherein, optionally, the set of one or more transmission parameters is associated with a discrete value so that based on the discrete value the set of one or more transmission parameters is determinable.

8. The method according to any of claims 1 to 7, wherein a set of one or more transmission parameters from the plurality of sets of one or more transmission parameters comprises one or more of the following parameters i) to iii):
i) a transmission power parameter;
ii) one or more transmission channel parameters;
iii) a transmission interval parameter.

9. The method according to any of claims 1 to 8, comprising receiving (501) a signal representation, the signal representation comprising the first identifier information and the second identifier information, wherein, optionally, in said signal representation the first identifier information is transmitted based on the set of one or more transmission parameters associated with the first identifier information and the second identifier information is transmitted based on the set of one or more transmission parameters associated with the second identifier information.

10. The method according to claim 9, wherein said signal representation is based on a multiplexing of a transmission of the first identifier and the transmission of the second identifier, wherein, optionally, the first identifier information indicative of information allowing the logical radio node of the venue to be identified and the second identifier information indicative of information allowing the second logical radio node of the venue to be identified are received from a same radio node.

11. The method according to claim 10, wherein said multiplexing is performed based on at least one of the following multiplexing schemes i) to iii):
i) time division multiplexing,
ii) frequency division multiplexing, and
iii) code division multiplexing;
wherein, optionally, said time division multiplexing is performed based on at least one transmission interval parameter of the set of one or more transmission parameters associated with the first identifier information and/or based on at least one transmission interval parameter of the set of one or more transmission parameters associated with the second identifier information, and wherein, optionally, said frequency division multiplexing is performed based on at least one transmission channel parameter of the set of one or more transmission parameters associated with the first identifier information and/or based on at least one transmission channel parameter of the set of one or more transmission parameters associated with the second identifier information.

12. A second method (600), performed by a radio node (140, 140', 1000), comprising:
- transmitting (601) a first identifier information indicative of information allowing a first logical radio node of a venue to be identified, wherein said transmitting the first identifier information indicative of information allowing the first logical radio node of the venue to be identified is performed according to a first set of one or more transmission parameters from a plurality of sets of one or more transmission parameters, and
- transmitting (601) a second identifier information allowing a second logical radio node of the venue to be identified, wherein said transmitting the second identifier information indicative of information allowing the second logical radio node of the venue to be identified is performed according to a second set of one or more transmission parameters from the plurality of sets of one or more transmission parameters, and wherein the first set of one or more transmission parameters is at least partially different from the second set of one or more transmission parameters; wherein
- at least a part of each identifier information of at least one identifier information of the first identifier information and the second identifier information depends on the set of one or more transmission parameters associated with the respective identifier information, **characterized in that** (i) the set of one or more transmission parameters from the plurality of sets of one or more transmission parameters and (ii) the second set of one or more transmission parameters from the plurality of sets of one or more transmission parameters are associated with different positioning quality-of-services, wherein the radio node is configured according to the set of one or more transmission parameters associated with the first identifier information and according to set of one or more transmission parameters associated with the second identifier information.

13. The method according to claim 12, comprising, for each identifier information of at least one identifier information of the first identifier information and the second identifier information:
- determining the respective identifier information based on the set of one or more transmission parameters associated with the respective identifier information.

14. The second method according to any of the claims 12 or 13, each set of the first set of one or more transmission parameters and the second set of one or more transmission parameters is associated with a respective discrete value, wherein each set of the first set of one or more transmission parameters and the second set of one or more transmission parameters comprises a combination of more than one transmission parameters and wherein the respective discrete value is indicative of a value from a finite number of values.

15. The method according to any of the claims 12 to 14, wherein at least a part of the identifier information of at least one identifier information of the first identifier information and the second identifier information is ownership information, wherein the ownership information is indicative of one or more radio nodes of a company or an owner of the one or more radio nodes, and at least another part of the identifier information of at least one identifier information of the first identifier information and the second identifier information is instance information, wherein the instance information is indicative of an identification of a radio node of the one or more radio nodes of the company or the owner of the one or more radio nodes, wherein, optionally, the instance information is divided into a plurality of upper bits and a plurality of lower bits.

16. The second method according to claims 14 and 15, wherein the instance information comprises the discrete value.

17. The method according to any of claims 12 to 16, comprising transmitting a signal representation, said signal representation comprising the first identifier information and the second identifier information.

18. The method according to claim 17, wherein said signal representation is based on a multiplexing of a transmission of the first identifier and the transmission of the second identifier.

19. The method according to claim 18, wherein said multiplexing is performed based on at least one of the following multiplexing schemes i) to iii):
i) time division multiplexing,
ii) frequency division multiplexing, and
iii) code division multiplexing;
wherein, optionally, said time division multiplexing is performed based on at least one transmission interval parameter of the set of one or more transmission parameters associated with the first identifier information and/or based on at least one transmission interval parameter of the set of one or more transmission parameters associated with the second identifier information, and wherein, optionally, said frequency division multiplexing is performed based on at least one transmission channel parameter of the set of one or more transmission parameters associated with the first identifier information and/or based on at least one transmission channel parameter of the set of one or more transmission parameters associated with the second identifier information.

20. A first apparatus (150,1100) comprising at least one processor (1110) and at least one memory (1130) including computer program code, the at least one memory (1130) and the computer program code configured to, with the at least one processor (1110), cause the first apparatus (150, 1100) to at least perform a method according to any of claims 1 to 11.

21. A radio node (140, 140', 1000), comprising at least one processor (1010) and at least one memory (1030) including computer program code, the at least one memory (1030) and the computer program code configured to, with the at least one processor (1010), cause the radio node (140, 140', 1000) to at least perform a method of any of claims 12 to 19.

22. A system, comprising at least one first apparatus (150, 1100) according to claim 20 and at least one radio node (140, 140', 1000) according to claim 21.

## Patentansprüche

1. Erstes Verfahren (200), das von mindestens einer ersten Einrichtung (150, 1100) durchgeführt wird, umfassend:
- Erhalten (201) erster Kennungsinformationen, die Informationen angeben, die es ermöglichen, einen logischen Funkknoten eines Standortes zu identifizieren, wobei die ersten Kennungsinformationen mit einem Satz eines oder mehrerer Übertragungsparameter aus einer Vielzahl von Sätzen eines oder mehrerer Übertragungsparameter verknüpft sind, wobei jeder Übertragungsparameter des Satzes eines oder mehrerer Übertragungsparameter, der mit den ersten Kennungsinformationen verknüpft ist, ein jeweiliges Attribut in Bezug auf eine Kommunikation des logischen Funkknotens angibt, der die ersten Kennungsinformationen am Standort überträgt;
- Erhalten (202) zweiter Kennungsinformationen, die Informationen angeben, die es ermöglichen, einen zweiten logischen Funkknoten des Standortes zu identifizieren, wobei die zweiten Kennungsinformationen mit einem zweiten Satz eines oder mehrerer Übertragungsparameter aus der Vielzahl von Sätzen eines oder mehrerer Übertragungsparameter verknüpft sind, wobei jeder Übertragungsparameter des Satzes eines oder mehrerer Übertragungsparameter, der mit den zweiten Kennungsinformationen verknüpft ist, ein jeweiliges Attribut in Bezug auf eine Kommunikation des zweiten logischen Funkknotens angibt, der die zweiten Kennungsinformationen am Standort überträgt;
- Bestimmen (203, 301), ob sich der Satz eines oder mehrerer Übertragungsparameter, der mit den ersten Kennungsinformationen verknüpft ist, mindestens teilweise von dem Satz eines oder mehrerer Übertragungsparameter, der mit den zweiten Kennungsinformationen verknüpft ist, unterscheidet, **dadurch gekennzeichnet, dass** (i) der Satz eines oder mehrerer Übertragungsparameter aus der Vielzahl von Sätzen eines oder mehrerer Übertragungsparameter und (ii) der zweite Satz eines oder mehrerer Übertragungsparameter aus der Vielzahl von Sätzen eines oder mehrerer Übertragungsparameter mit unterschiedlichen Positionierungsdienstgüten verknüpft sind, und das Verfahren ferner umfasst, wenn (301) sich der Satz eines oder mehrerer Übertragungsparameter, der mit den ersten Kennungsinformationen verknüpft ist, mindestens teilweise von dem Satz eines oder mehrerer Übertragungsparameter, der mit den zweiten Kennungsinformationen verknüpft ist, unterscheidet:
- Auswählen (302) eines Satzes eines oder mehrerer Übertragungsparameter aus dem Satz eines oder mehrerer Übertragungsparameter, der mit den ersten Kennungsinformationen verknüpft ist, und dem Satz eines oder mehrerer Übertragungsparameter, der mit den zweiten Kennungsinformationen verknüpft ist, und
- Konfigurieren (303) der mindestens einen ersten Einrichtung basierend auf dem ausgewählten Satz eines oder mehrerer Übertragungsparameter.

2. Verfahren nach Anspruch 1, wobei ein erster Satz eines oder mehrerer Übertragungsparameter aus der Vielzahl von Sätzen eines oder mehrerer Übertragungsparameter mit einer mittleren Positionierungsdienstgüte verknüpft ist und wobei ein zweiter Satz eines oder mehrerer Übertragungsparameter aus der Vielzahl von Sätzen eines oder mehrerer Übertragungsparameter mit einer hohen Positionierungsdienstgüte verknüpft ist, und das Verfahren ferner, wenn der zweite Satz eines oder mehrerer Übertragungsparameter, der mit einer hohen Positionierungsdienstgüte verknüpft ist, ausgewählt wird, Sammeln von Daten und optional Veranlassen (405), dass mindestens einen Teil der gesammelten Daten an einen Server bereitgestellt wird, umfasst.

3. Verfahren nach Anspruch 2, wobei das Auswählen eines Satzes eines oder mehrerer Übertragungsparameter basierend auf einem der Folgenden durchgeführt wird:
- einem in der mindestens einen ersten Einrichtung gespeicherten Profil; und
- einer Benutzerinteraktion über eine Benutzerschnittstelle der mindestens einen ersten Einrichtung.

4. Verfahren nach einem der Ansprüche 1 bis 3, wobei, wenn sich der Satz eines oder mehrerer Übertragungsparameter, der mit den ersten Kennungsinformationen verknüpft ist, mindestens teilweise von dem Satz eines oder mehrerer Übertragungsparameter, der mit den zweiten Kennungsinformationen verknüpft ist, unterscheidet, das Verfahren ferner umfasst:
- Veranlassen (401), dass Optionsinformationen über eine Benutzerschnittstelle der mindestens einen ersten Einrichtung bereitgestellt werden, wobei die Optionsinformationen so konfiguriert sind, dass einem Benutzer mindestens zwei Optionen zur Auswahl angeboten werden, wobei eine erste Option der mindestens zwei Optionen mit dem Satz eines oder mehrerer Übertragungsparameter verknüpft ist, der mit den ersten Kennungsinformationen verknüpft ist, und eine zweite Option der mindestens zwei Optionen mit dem Satz eines oder mehrerer Übertragungsparameter verknüpft ist, der mit den zweiten Kennungsinformationen verknüpft ist, und
- Empfangen (402) einer Auswahl einer der mindestens zwei Optionen.

5. Verfahren nach einem der Ansprüche 1 bis 4, wobei jeder Satz eines oder mehrerer Übertragungsparameter aus der Vielzahl von Sätzen eines oder mehrerer Übertragungsparameter einer mit unterschiedlichen Positionierungsdienstgüte verknüpft ist.

6. Verfahren nach einem der Ansprüche 1 bis 5, wobei das Bestimmen, ob sich der Satz eines oder mehrerer Übertragungsparameter, der mit den ersten Kennungsinformationen verknüpft ist, mindestens teilweise von dem Satz eines oder mehrerer Übertragungsparameter, der mit den zweiten Kennungsinformationen verknüpft ist, unterscheidet, basierend auf den erhaltenen ersten Kennungsinformationen und den erhaltenen zweiten Kennungsinformationen durchgeführt wird, wobei das Verfahren optional für jede der erhaltenen ersten und zweiten Kennungsinformationen umfasst:
- Bestimmen (801) des Satzes eines oder mehrerer Übertragungsparameter aus der Vielzahl von Sätzen eines oder mehrerer Übertragungsparameter, der mit den jeweils erhaltenen Kennungsinformationen verknüpft ist, basierend auf den jeweils erhaltenen Kennungsinformationen.

7. Verfahren nach Anspruch 6, das für jede der erhaltenen ersten und zweiten Kennungsinformationen umfasst:
- Bestimmen eines diskreten Wertes basierend auf den jeweiligen Kennungsinformationen, wobei der diskrete Wert einen Wert aus einer endlichen Anzahl von Werten angibt;
- Bestimmen des Satzes eines oder mehrerer Übertragungsparameter aus der Vielzahl von Sätzen eines oder mehrerer Übertragungsparameter, der mit den jeweils erhaltenen Kennungsinformationen verknüpft ist, basierend auf dem bestimmten diskreten Wert;
wobei optional der Satz eines oder mehrerer Übertragungsparameter mit einem diskreten Wert verknüpft ist, sodass der Satz eines oder mehrerer Übertragungsparameter basierend auf dem diskreten Wert bestimmbar ist.

8. Verfahren nach einem der Ansprüche 1 bis 7, wobei ein Satz eines oder mehrerer Übertragungsparameter aus der Vielzahl von Sätzen eines oder mehrerer Übertragungsparameter einen oder mehrere der folgenden Parameter i) bis iii) umfasst:
i) einen Übertragungsleistungsparameter;
ii) einen oder mehrere Übertragungskanalparameter;
iii) einen Übertragungsintervallparameter.

9. Verfahren nach einem der Ansprüche 1 bis 8, umfassend Empfangen (501) einer Signaldarstellung, wobei die Signaldarstellung die ersten Kennungsinformationen und die zweiten Kennungsinformationen umfasst, wobei optional in der Signaldarstellung die ersten Kennungsinformationen basierend auf dem Satz eines oder mehrerer Übertragungsparameter, der mit den ersten Kennungsinformationen verknüpft ist, übertragen werden und die zweiten Kennungsinformationen basierend auf dem Satz eines oder mehrerer Übertragungsparameter, der mit den zweiten Kennungsinformationen verknüpft ist, übertragen werden.

10. Verfahren nach Anspruch 9, wobei die Signaldarstellung auf einem Multiplexing einer Übertragung der ersten Kennung und der Übertragung der zweiten Kennung basiert, wobei optional die ersten Kennungsinformationen, die Informationen angeben, die es ermöglichen, den logischen Funkknoten des Standortes zu identifizieren, und die zweiten Kennungsinformationen, die Informationen angeben, die es ermöglichen, den logischen Funkknoten des zweiten Standortes zu identifizieren, von einem selben Funkknoten empfangen werden.

11. Verfahren nach Anspruch 10, wobei das Multiplexing basierend auf mindestens einem der folgenden Multiplexing-Schemata i) bis iii) durchgeführt wird:
i) Zeitmultiplexing,
ii) Frequenzmultiplexing und
iii) Codemultiplexing;
wobei das Zeitmultiplexing optional basierend auf mindestens einem Übertragungsintervallparameter aus dem Satz eines oder mehrerer Übertragungsparameter, der mit den ersten Kennungsinformationen verknüpft ist, und/oder basierend auf mindestens einem Übertragungsintervallparameter aus dem Satz eines oder mehrerer Übertragungsparameter, der mit den zweiten Kennungsinformationen verknüpft ist, durchgeführt wird und wobei optional das Frequenzmultiplexing basierend auf mindestens einem Übertragungskanalparameter aus dem Satz eines oder mehrerer Übertragungsparameter, der mit den ersten Kennungsinformationen verknüpft ist, und/oder basierend auf mindestens einem Übertragungskanalparameter aus dem Satz eines oder mehrerer Übertragungsparameter, der mit den zweiten Kennungsinformationen verknüpft ist, durchgeführt wird.

12. Zweites Verfahren (600), das von einem Funkknoten (140, 140', 1000) durchgeführt wird, umfassend:
- Übertragen (601) erster Kennungsinformationen, die Informationen angeben, die es ermöglichen, einen ersten logischen Funkknoten eines Standortes zu identifizieren, wobei das Übertragen der ersten Kennungsinformationen, die Informationen angeben, die es ermöglichen, den ersten logischen Funkknoten des Standortes zu identifizieren, gemäß einem ersten Satz eines oder mehrerer Übertragungsparameter aus einer Vielzahl von Sätzen eines oder mehrerer Übertragungsparameter durchgeführt wird, und
- Übertragen (601) zweiter Kennungsinformationen, die Informationen angeben, die es ermöglichen, einen zweiten logischen Funkknoten eines Standortes zu identifizieren, wobei das Übertragen der zweiten Kennungsinformationen, die Informationen angeben, die es ermöglichen, den zweiten logischen Funkknoten des Standortes zu identifizieren, gemäß einem zweiten Satz eines oder mehrerer Übertragungsparameter aus einer Vielzahl von Sätzen eines oder mehrerer Übertragungsparameter durchgeführt wird und wobei der erste Satz eines oder mehrerer Übertragungsparameter sich mindestens teilweise vom zweiten Satz eines oder mehrerer Übertragungsparameter unterscheidet; wobei
- mindestens ein Teil jeder Kennungsinformation mindestens einer Kennungsinformation der ersten Kennungsinformationen und der zweiten Kennungsinformationen von dem Satz eines oder mehrerer Übertragungsparameter abhängt, der mit den jeweiligen Kennungsinformationen verknüpft ist, **dadurch gekennzeichnet, dass** (i) der Satz eines oder mehrerer Übertragungsparameter aus der Vielzahl von Sätzen eines oder mehrerer Übertragungsparameter und (ii) der zweite Satz eines oder mehrerer Übertragungsparameter aus der Vielzahl von Sätzen eines oder mehrerer Übertragungsparameter mit unterschiedlichen Positionierungsdienstgüten verknüpft sind, wobei der Funkknoten gemäß dem Satz eines oder mehrerer Übertragungsparameter, der mit den ersten Kennungsinformationen verknüpft ist, und gemäß dem Satz eines oder mehrerer Übertragungsparameter, der mit den zweiten Kennungsinformationen verknüpft ist, konfiguriert ist.

13. Verfahren nach Anspruch 12, das für jede Kennungsinformation mindestens einer Kennungsinformation der ersten Kennungsinformationen und der zweiten Kennungsinformationen umfasst:
- Bestimmen der jeweiligen Kennungsinformationen basierend auf dem Satz eines oder mehrerer Übertragungsparameter, der mit den jeweiligen Kennungsinformationen verknüpft ist.

14. Zweites Verfahren nach einem der Ansprüche 12 oder 13, wobei jeder Satz des ersten Satzes eines oder mehrerer Übertragungsparameter und des zweiten Satzes eines oder mehrerer Übertragungsparameter mit einem jeweiligen diskreten Wert verknüpft ist, wobei jeder Satz des ersten Satzes eines oder mehrerer Übertragungsparameter und des zweiten Satzes eines oder mehrerer Übertragungsparameter eine Kombination aus mehr als einem Übertragungsparameter umfasst und wobei der jeweilige diskrete Wert einen Wert aus einer endlichen Anzahl von Werten angibt.

15. Verfahren nach einem der Ansprüche 12 bis 14, wobei mindestens ein Teil der Kennungsinformation mindestens einer Kennungsinformation der ersten Kennungsinformationen und der zweiten Kennungsinformationen Eigentumsinformationen sind, wobei die Eigentumsinformationen einen oder mehrere Funkknoten eines Unternehmens oder einen Eigentümer des einen oder der mehreren Funkknoten angeben, und mindestens ein anderer Teil der Kennungsinformation mindestens einer Kennungsinformation der ersten Kennungsinformationen und der zweiten Kennungsinformationen Instanzinformationen sind, wobei die Instanzinformationen eine Kennung eines Funkknotens des einen oder der mehreren Funkknoten des Unternehmens oder des Eigentümers des einen oder der mehreren Funkknoten angeben, wobei die Instanzinformationen optional in eine Vielzahl von oberen Bits und eine Vielzahl von unteren Bits unterteilt sind

16. Zweites Verfahren nach den Ansprüchen 14 und 15, wobei die Instanzinformationen den diskreten Wert umfassen.

17. Verfahren nach einem der Ansprüche 12 bis 16, umfassend Übertragen einer Signaldarstellung, wobei die Signaldarstellung die ersten Kennungsinformationen und die zweiten Kennungsinformationen umfasst.

18. Verfahren nach Anspruch 17, wobei die Signaldarstellung auf einem Multiplexing einer Übertragung der ersten Kennung und der Übertragung der zweiten Kennung basiert.

19. Verfahren nach Anspruch 18, wobei das Multiplexing basierend auf mindestens einem der folgenden Multiplexing-Schemata i) bis iii) durchgeführt wird:
i) Zeitmultiplexing,
ii) Frequenzmultiplexing und
iii) Codemultiplexing;
wobei das Zeitmultiplexing optional basierend auf mindestens einem Übertragungsintervallparameter aus dem Satz eines oder mehrerer Übertragungsparameter, der mit den ersten Kennungsinformationen verknüpft ist, und/oder basierend auf mindestens einem Übertragungsintervallparameter aus dem Satz eines oder mehrerer Übertragungsparameter, der mit den zweiten Kennungsinformationen verknüpft ist, durchgeführt wird und wobei optional das Frequenzmultiplexing basierend auf mindestens einem Übertragungskanalparameter aus dem Satz eines oder mehrerer Übertragungsparameter, der mit den ersten Kennungsinformationen verknüpft ist, und/oder basierend auf mindestens einem Übertragungskanalparameter aus dem Satz eines oder mehrerer Übertragungsparameter, der mit den zweiten Kennungsinformationen verknüpft ist, durchgeführt wird.

20. Erste Einrichtung (150, 1100), die mindestens einen Prozessor (1110) und mindestens einen Speicher (1130) umfasst, der Computerprogrammcode beinhaltet, wobei der mindestens eine Speicher (1130) und der Computerprogrammcode dafür konfiguriert sind, mit dem mindestens einen Prozessor (1110) die erste Einrichtung (150, 1100) zu veranlassen, mindestens ein Verfahren nach einem der Ansprüche 1 bis 11 durchzuführen.

21. Funkknoten (140, 140', 1000), umfassend mindestens einen Prozessor (1010) und mindestens einen Speicher (1030), der Computerprogrammcode beinhaltet, wobei der mindestens eine Speicher (1030) und der Computerprogrammcode dafür konfiguriert sind, mit dem mindestens einen Prozessor (1010) den Funkknoten (140, 140', 1000) zu veranlassen, mindestens ein Verfahren nach einem der Ansprüche 12 bis 19 durchzuführen.

22. System, umfassend mindestens eine erste Einrichtung (150, 1100) nach Anspruch 20 und mindestens einen Funkknoten (140, 140', 1000) nach Anspruch 21.

## Revendications

1. Un premier procédé (200), mis en œuvre par au moins un premier appareil (150, 1100), comprenant :
- l'obtention (201) des informations de premier identifiant indicatives d'informations permettant d'identifier un nœud radio logique d'un lieu, dans lequel les informations de premier identifiant sont associées à un ensemble d'un ou plusieurs paramètres de transmission provenant d'une pluralité d'ensembles d'un ou plusieurs paramètres de transmission, dans lequel chaque paramètre de transmission de l'ensemble d'un ou plusieurs paramètres de transmission associé aux informations de premier identifiant est indicatif d'un attribut respectif par rapport à une communication du nœud radio logique transmettant les informations de premier identifiant dans le lieu ;
- l'obtention (202) des informations de second identifiant indicatives d'informations permettant d'identifier un second nœud radio logique du lieu, dans lequel les informations de second identifiant sont associées à un second ensemble d'un ou plusieurs paramètres de transmission provenant de la pluralité d'ensembles d'un ou plusieurs paramètres de transmission, dans lequel chaque paramètre de transmission de l'ensemble d'un ou plusieurs paramètres de transmission associé aux informations de second identifiant est indicatif d'un attribut respectif par rapport à une communication du second nœud radio logique transmettant les informations de second identifiant dans le lieu ;
- la détermination (203, 301) si l'ensemble d'un ou plusieurs paramètres de transmission associé aux informations de premier identifiant est au moins partiellement différent de l'ensemble d'un ou plusieurs paramètres de transmission associé aux informations de second identifiant, **caractérisé en ce que** (i) l'ensemble d'un ou plusieurs paramètres de transmission parmi la pluralité d'ensembles d'un ou plusieurs paramètres de transmission et (ii) le second ensemble d'un ou plusieurs paramètres de transmission parmi la pluralité d'ensembles d'un ou plusieurs paramètres de transmission est associé à des qualités de service de positionnement différentes, et le procédé comprend en outre, lorsque (301) l'ensemble d'un ou plusieurs paramètres de transmission associé aux informations de premier identifiant est au moins partiellement différent de l'ensemble d'un ou plusieurs paramètres de transmission associé aux informations de second identifiant :
- la sélection (302) d'un ensemble d'un ou plusieurs paramètres de transmission parmi l'ensemble d'un ou plusieurs paramètres de transmission associé aux informations de premier identifiant et l'ensemble d'un ou plusieurs paramètres de transmission associé aux informations de second identifiant, et
- la configuration (303) de l'au moins un premier appareil sur la base de l'ensemble sélectionné d'un ou plusieurs paramètres de transmission.

2. Procédé selon la revendication 1, dans lequel un premier ensemble d'un ou plusieurs paramètres de transmission de la pluralité d'ensembles d'un ou plusieurs paramètres de transmission est associé à une qualité de service de positionnement moyenne et dans lequel un second ensemble d'un ou plusieurs paramètres de transmission de la pluralité d'ensembles d'un ou plusieurs paramètres de transmission est associé à une qualité de service de positionnement élevée, et le procédé comprend en outre, lorsque ledit second ensemble d'un ou plusieurs paramètres de transmission associé à une qualité de service de positionnement élevée est sélectionné, les étapes consistant à collecter des données et, facultativement, causer (405) la fourniture d'au moins une partie des données collectées à un serveur.

3. Procédé selon la revendication 2, dans lequel ladite sélection d'un ensemble d'un ou plusieurs paramètres de transmission est effectuée sur la base de l'un parmi :
- un profil stocké dans ledit au moins un premier appareil ; et
- une interaction utilisateur via une interface utilisateur de l'au moins un appareil.

4. Procédé selon l'une quelconque des revendications 1 à 3, dans lequel, lorsque l'ensemble d'un ou plusieurs paramètres de transmission associé aux informations de premier identifiant est au moins partiellement différent de l'ensemble d'un ou plusieurs paramètres de transmission associé aux informations de second identifiant, le procédé comprend en outre :
- le fait d'amener (401) la fourniture d'informations d'option via une interface utilisateur du au moins un premier appareil, dans lequel les informations d'option sont configurées pour présenter à un utilisateur au moins deux options à sélectionner, dans lequel une première option des au moins deux options est associée à l'ensemble d'un ou plusieurs paramètres de transmission associé aux informations de premier identifiant et une seconde option des au moins deux options est associée à l'ensemble d'un ou plusieurs paramètres de transmission associé aux informations de second identifiant, et
- la réception (402) d'une sélection de la une des au moins deux options.

5. Procédé selon l'une quelconque des revendications 1 à 4, dans lequel chaque ensemble d'un ou plusieurs paramètres de transmission de la pluralité d'ensembles d'un ou plusieurs paramètres de transmission est associé à une qualité de service de positionnement différente.

6. Procédé selon l'une quelconque des revendications 1 à 5, dans lequel ladite détermination de la différence, au moins partielle, entre l'ensemble d'un ou plusieurs paramètres de transmission associé aux informations de premier identifiant et l'ensemble d'un ou plusieurs paramètres de transmission associé aux informations de second identifiant est effectuée sur la base des informations de premier identifiant obtenues et des informations de second identifiant obtenues, dans lequel le procédé comprend, facultativement, pour chacune des premières et informations de second identifiant obtenues :
- la détermination (801) de l'ensemble d'un ou plusieurs paramètres de transmission de la pluralité d'ensembles d'un ou plusieurs paramètres de transmission étant associé aux informations d'identifiant obtenu respectif sur la base des informations d'identifiant obtenu respectif.

7. Procédé selon la revendication 6, comprenant, pour chacune des premières et informations de second identifiant obtenues :
- la détermination d'une valeur discrète sur la base des informations d'identifiant respectif, dans lequel la valeur discrète est indicative d'une valeur parmi un nombre fini de valeurs ;
- la détermination de l'ensemble d'un ou plusieurs paramètres de transmission de la pluralité d'ensembles d'un ou plusieurs paramètres de transmission étant associé aux informations d'identifiant obtenu respectif sur la base de la valeur discrète déterminée ;
dans lequel, facultativement, l'ensemble d'un ou plusieurs paramètres de transmission est associé à une valeur discrète de sorte que, sur la base de la valeur discrète, l'ensemble d'un ou plusieurs paramètres de transmission peut être déterminé.

8. Procédé selon l'une quelconque des revendications 1 à 7, dans lequel un ensemble d'un ou plusieurs paramètres de transmission parmi la pluralité d'ensembles d'un ou plusieurs paramètres de transmission comprend un ou plusieurs des paramètres suivants i) à iii) :
i) un paramètre de puissance de transmission ;
ii) un ou plusieurs paramètres de canal de transmission ;
iii) un paramètre d'intervalle de transmission.

9. Procédé selon l'une quelconque des revendications 1 à 8, comprenant la réception (501) d' une représentation de signal, la représentation de signal comprenant les informations de premier identifiant et les informations de second identifiant, dans lequel, facultativement, dans ladite représentation de signal, les informations de premier identifiant sont transmises sur la base de l'ensemble d'un ou plusieurs paramètres de transmission associé aux informations de premier identifiant et les informations de second identifiant sont transmises sur la base de l'ensemble d'un ou plusieurs paramètres de transmission associé aux informations de second identifiant.

10. Procédé selon la revendication 9, dans lequel ladite représentation de signal est basée sur un multiplexage d'une transmission du premier identifiant et de la transmission du second identifiant, dans lequel, facultativement, les informations de premier identifiant permettant d'identifier le nœud radio logique du lieu et les informations de second identifiant permettant d'identifier le second nœud radio logique du lieu sont reçues à partir d'un même nœud radio.

11. Procédé selon la revendication 10, dans lequel ledit multiplexage est effectué sur la base d'au moins un des schémas de multiplexage suivants i) à iii) :
i) un multiplexage par répartition dans le temps,
ii) un multiplexage par répartition en fréquence, et
iii) un multiplexage par répartition de code ;
dans lequel, facultativement, ledit multiplexage par répartition dans le temps est effectué sur la base d'au moins un paramètre d'intervalle de transmission de l'ensemble d'un ou plusieurs paramètres de transmission associés aux informations de premier identifiant et/ou sur la base d'au moins un paramètre d'intervalle de transmission de l'ensemble d'un ou plusieurs paramètres de transmission associé aux informations de second identifiant, et dans lequel, facultativement, ledit multiplexage par répartition en fréquence est effectué sur la base d'au moins un paramètre de canal de transmission de l'ensemble d'un ou plusieurs paramètres de transmission associé aux informations de premier identifiant et/ou sur la base d'au moins un paramètre de canal de transmission de l'ensemble d'un ou plusieurs paramètres de transmission associé aux informations de second identifiant.

12. Un second procédé (600), mis en œuvre par un nœud radio (140, 140', 1000), comprenant :
- la transmission (601) des informations de premier identifiant permettant d'identifier un premier nœud radio logique d'un lieu, dans lequel ladite transmission des informations de premier identifiant indiquant des informations permettant d'identifier le premier nœud radio logique du lieu est effectuée selon un premier ensemble d'un ou plusieurs paramètres de transmission parmi une pluralité d'ensembles d'un ou plusieurs paramètres de transmission, et
- la transmission (601) des informations de second identifiant permettant d'identifier un second nœud radio logique du site, dans lequel ladite transmission des information de second identifiant indiquant des informations permettant d'identifier le second nœud radio logique du lieu est effectuée selon un second ensemble d'un ou plusieurs paramètres de transmission parmi la pluralité d'ensembles d'un ou plusieurs paramètres de transmission, et dans lequel le premier ensemble d'un ou plusieurs paramètres de transmission est au moins partiellement différent du second ensemble d'un ou plusieurs paramètres de transmission ; dans lequel
- au moins une partie de chaque information d'identifiant d'au moins une information d'identifiant des informations de premier identifiant et des informations de second identifiant dépend de l'ensemble d'un ou plusieurs paramètres de transmission associé aux informations d'identifiant respectif, **caractérisé en ce que** (i) l'ensemble d'un ou plusieurs paramètres de transmission parmi la pluralité d'ensembles d'un ou plusieurs paramètres de transmission et (ii) le second ensemble d'un ou plusieurs paramètres de transmission parmi la pluralité d'ensembles d'un ou plusieurs paramètres de transmission est associé à différentes qualités de service de positionnement, dans lequel le nœud radio est configuré selon l'ensemble d'un ou plusieurs paramètres de transmission associé aux informations de premier identifiant et selon l'ensemble d'un ou plusieurs paramètres de transmission associé aux informations de second identifiant.

13. Procédé selon la revendication 12, comprenant, pour chaque information d'identifiant, au moins une information d'identifiant parmi les informations de premier identifiant et les informations de second identifiant :
- la détermination des informations d'identifiant respectif sur la base de l'ensemble d'un ou plusieurs paramètres de transmission associé aux informations d'identifiant respectif.

14. Le second procédé selon l'une quelconque des revendications 12 ou 13, chaque ensemble du premier ensemble d'un ou plusieurs paramètres de transmission et du second ensemble d'un ou plusieurs paramètres de transmission est associé à une valeur discrète respective, dans lequel chaque ensemble du premier ensemble d'un ou plusieurs paramètres de transmission et du second ensemble d'un ou plusieurs paramètres de transmission comprend une combinaison de plus d'un paramètre de transmission et dans lequel la valeur discrète respective est indicative d'une valeur parmi un nombre fini de valeurs.

15. Procédé selon l'une quelconque des revendications 12 à 14, dans lequel au moins une partie des informations d'identifiant d'au moins une information d'identifiant des informations de premier identifiant et des informations de second identifiant est une information de propriété, dans lequel l'information de propriété indiquant un ou plusieurs nœuds radio d'une société ou d'un propriétaire des un ou plusieurs nœuds radio, et au moins une autre partie des informations d'identifiant d'au moins une information d'identifiant de l'information de premier identifiant et de l'information de second identifiant est une information d'instance, dans lequel l'information d'instance indique une identification d'un nœud radio parmi les un ou plusieurs nœuds radio de la société ou du propriétaire des un ou plusieurs nœuds radio, dans lequel, facultativement, l'information d'instance est divisée en une pluralité de bits supérieurs et une pluralité de bits inférieurs.

16. Le second procédé selon les revendications 14 et 15, dans lequel l'information d'instance comprend la valeur discrète.

17. Procédé selon l'une quelconque des revendications 12 à 16, comprenant la transmission d'une représentation de signal, ladite représentation de signal comprenant les informations de premier identifiant et les informations de second identifiant.

18. Procédé selon la revendication 17, dans lequel ladite représentation de signal est basée sur un multiplexage d'une transmission du premier identifiant et de la transmission du second identifiant.

19. Procédé selon la revendication 18, dans lequel ledit multiplexage est effectué sur la base d'au moins un des schémas de multiplexage suivants i) à iii) :
i) un multiplexage par répartition dans le temps,
ii) un multiplexage par répartition en fréquence, et
iii) un multiplexage par répartition de code ;
dans lequel, facultativement, ledit multiplexage par répartition dans le temps est effectué sur la base d'au moins un paramètre d'intervalle de transmission de l'ensemble d'un ou plusieurs paramètres de transmission associés aux informations de premier identifiant et/ou sur la base d'au moins un paramètre d'intervalle de transmission de l'ensemble d'un ou plusieurs paramètres de transmission associé aux informations de second identifiant, et dans lequel, facultativement, ledit multiplexage par répartition en fréquence est effectué sur la base d'au moins un paramètre de canal de transmission de l'ensemble d'un ou plusieurs paramètres de transmission associé aux informations de premier identifiant et/ou sur la base d'au moins un paramètre de canal de transmission de l'ensemble d'un ou plusieurs paramètres de transmission associé aux informations de second identifiant.

20. Un premier appareil (150, 1100) comprenant au moins un processeur (1110) et au moins une mémoire (1130) incluant un code de programme informatique, la au moins une mémoire (1130) et le code de programme informatique étant configurés pour, avec le au moins un processeur (1110), amener le premier appareil (150, 1100) à mettre en œuvre au moins un procédé selon l'une quelconque des revendications 1 à 11.

21. Nœud radio (140, 140', 1000), comprenant au moins un processeur (1010) et au moins une mémoire (1030) incluant un code de programme informatique, la au moins une mémoire (1030) et le code de programme informatique étant configurés pour, avec le au moins un processeur (1010), amener le nœud radio (140, 140', 1000) à mettre en œuvre au moins un procédé selon l'une quelconque des revendications 12 à 19.

22. Système comprenant au moins un premier appareil (150, 1100) selon la revendication 20 et au moins un nœud radio (140, 140', 1000) selon la revendication 21.
